(19) Europäisches Patentamt / European Patent Office / Office européen des brevets

(11) **EP 4 223 982 B1**

(12) **EUROPEAN PATENT SPECIFICATION**

(45) Date of publication and mention
of the grant of the patent:
**04.06.2025 Bulletin 2025/23**

(21) Application number: **22215381.9**

(22) Date of filing: **21.12.2022**

(51) International Patent Classification (IPC):
**F01D 17/08** *(2006.01)* **F02C 9/00** *(2006.01)*

(52) Cooperative Patent Classification (CPC):
**F01D 17/08; F02C 9/00;** F05D 2260/80;
F05D 2260/81; F05D 2270/05; F05D 2270/44;
F05D 2270/71

(54) **SYSTEMS AND METHODS FOR PREDICTING AND OPTIMIZING PERFORMANCE OF GAS TURBINES**

SYSTEME UND VERFAHREN ZUR VORHERSAGE UND OPTIMIERUNG DER LEISTUNG VON GASTURBINEN

SYSTÈMES ET PROCÉDÉS DE PRÉDICTION ET D'OPTIMISATION DE PERFORMANCE DE TURBINES À GAZ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.02.2022 IN 202221005901**

(43) Date of publication of application:
**09.08.2023 Bulletin 2023/32**

(73) Proprietor: **Tata Consultancy Services Limited Maharashtra (IN)**

(72) Inventors:
• **BONDALAPATI, ABHISHEK**
**411028 Pune - Maharashtra (IN)**
• **SINGH, KULDEEP**
**411028 Pune - Maharashtra (IN)**
• **NISTALA, SRI HARSHA**
**411028 Pune - Maharashtra (IN)**
• **RUNKANA, VENKATARAMANA**
**411028 Pune - Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2005 193 739 US-A1- 2020 248 622**

**Description**

CROSS-REFERENCE TO RELATED APPLICATIONS AND PRIORITY

The present application claims priority to Indian application no. 202221005901, filed on February 3, 2022.

TECHNICAL FIELD

The disclosure herein generally relates to gas turbines, and, more particularly, to systems and methods for accurately predicting and optimizing performance of gas turbines.

BACKGROUND

Gas turbines are considered as one of the leading sources for generating clean energy with lowest carbon-di-oxide emissions among various thermal power generation equipment. They are used in different modes in critical industries such as power generation, oil and gas, manufacturing plants, aviation, as well medium and small industries. Generally, the gas turbines use natural gas or liquid fuels, such as diesel oil, furnace oil etc., as the energy sources for generating energy. However, due to the increased environmental concerns and demand for low carbon or carbon neutral energy generation, the gas turbines are moving towards adopting greener fuels like green hydrogen, ammonia, biogas, etc. And making a shift towards greener fuels is not easy for gas turbines as it poses various operational challenges such as flame stability and operational stability concerns in the combustors due to complex fuel kinetics, design constraints, higher nitrogen oxides emissions and the need to change optimal operating settings.

Compressor is one of the crucial components of the gas turbine as it increases the pressure energy of the incoming fluid which is then converted by the combustor and turbine into mechanical energy that is subsequently converted into electric power. The energy transfer in the compressor happens through a series of airfoils arranged in rotor and stator parts of the compressor. From the thermodynamic efficiency point of view, higher the pressure ratio in a cycle of the rotor and stator, the higher will be the efficiency. Therefore, the modern gas turbines are equipped with sophisticated designs supported by advanced materials and integrated with robust controllers to achieve and maintain higher pressure ratio operating points required to maximize the process efficiency. At such high pressures, the dynamics of the gas turbines are complex. In such conditions, preventing choking and surging at locations in the turbine where the pressure changes are sudden is of utmost importance because of the risk of severe mechanical damage to the gas turbine that can result in significant unplanned downtime and high maintenance cost.

Further, predicting the dynamic behavior of the compressor accurately at various flow rates is a challenging task due to unavailability of proprietary design data of gas turbines, lack of complete off-design performance maps and corrections that needs to be done in component performance maps to incorporate the effect of wear and tear with time. Generally, gas turbines operates at off-design conditions based on the requirement and predicting the performance of the compressor accurately during the off-design operation is critical for effective process monitoring, control, optimization, and safety and reliability of the gas turbine. Experiments at off design conditions can be conducted but they are expensive and time-consuming. Therefore, an accurate and robust model that can predict the performance of the compressor in real-time at various operating conditions and can accurately identify the surge and choking conditions is necessary to optimize the gas turbine system using greener fuels. US 2020248622 discloses a system including an aero-thermodynamic engine model configured to produce a real-time model-based estimate of engine parameters, a machine learning model configured to generate model correction errors indicating the difference between the real-time model-based estimate of engine parameters and sensed values of the engine parameters, and a comparator configured to produce residuals indicating a difference between the real-time model-based estimate of engine parameters and the sensed values of the engine parameters.

SUMMARY

Embodiments of the present disclosure present technological improvements as solutions to one or more of the above-mentioned technical problems recognized by the inventors in conventional systems.

For example, in one aspect, there is provided a processor implemented method for accurately predicting and optimizing performance of gas turbines. The method comprises receiving, by a gas turbine performance optimization system (GTPOS) via one or more hardware processors, real-time sensor data and non-real time data from one or more data sources; pre-processing, by the GTPOS via the one or more hardware processors, the real-time sensor data, and the non-real time data to obtain preprocessed data; estimating, by the GTPOS via the one or more hardware processors, one or more process parameters associated with a gas turbine based on the preprocessed data using one or more soft sensors; generating, by the GTPOS via the one or more hardware processors, input data associated with the gas turbine by combining the one or more process parameters and the preprocessed data, wherein the input data comprises one or more of: compressor associated input data, combustor associated input data, turbine associated input data, and gas turbine performance data, wherein the compressor associated input data comprises an inlet mass flow rate, an inlet temperature, an inlet pressure, an inlet guide vane (IGV) angle, and a shaft rotational speed, wherein the gas turbine performance data comprises a real-time value associated with each steady state gas turbine performance parameter of one or more steady state gas turbine performance parameters and a real-time value associated with each transient gas turbine state variable of one or more transient gas turbine state variables; determining, by the GTPOS via the one or more hardware processors, an outlet mass flow rate, an outlet pressure, an outlet temperature, and an outlet velocity for each stage of one or more stages of the compressor using the compressor associated input data and a compressor cross section area by iteratively performing: estimating, by the GTPOS via the one or more hardware processors, a Mach number of a first stage of the one or more stages based, at least in part, on the compressor cross section area, the IGV angle, a real gas constant, a specific heat constant ratio and one or more pre-determined gas turbine tuning parameters using a predefined Mach number calculation formula, wherein the one or more pre-determined gas turbine tuning parameters and the real gas constant are accessed from a knowledge database, wherein the specific heat constant ratio is determined based on the inlet temperature; determining, by the GTPOS via the one or more hardware processors, whether the estimated Mach number is below a predefined Mach number; upon determining that the Mach number is below the predefined Mach number, estimating, by the GTPOS via the one or more hardware processors, a relative flow coefficient for the first stage based, at least in part on, the estimated Mach number, the inlet mass flow rate, the inlet temperature, the inlet pressure, the shaft rotational speed, the specific heat constant ratio, and the one or more pre-determined gas turbine tuning parameters; determining, by the GTPOS via the one or more hardware processors, a relative pressure coefficient for the first stage based on the relative flow coefficient using one or more non-dimensional characteristics plots and the one or more pre-determined gas turbine tuning parameters, wherein the one or more non-dimensional characteristics plots are accessed from the knowledge database; determining, by the GTPOS via the one or more hardware processors, an efficiency of the first stage based, at least in part, on the relative pressure coefficient, the relative flow coefficient, and the one or more non-dimensional characteristics plots; estimating, by the GTPOS via the one or more hardware processors, the outlet mass flow rate, the outlet pressure, the outlet temperature, and the outlet velocity for the first stage based, at least in part, on the relative flow coefficient, the relative pressure coefficient, the efficiency, and the Mach number; and identifying, by the GTPOS via the one or more hardware processors, the outlet mass flow rate as the inlet mass flow rate, the outlet pressure as the inlet pressure, the outlet temperature as the inlet temperature, and a next stage of the one or more stages as the first stage, until all the stages in the one or more stages are identified; estimating, by the GTPOS via the one or more hardware processors, combustor output data associated with combusted gases of the gas turbine based, at least in part, on the outlet mass flow rate, the outlet pressure, the outlet temperature and the outlet velocity, and the combustor associated input data, the combusted output data comprising a combustor pressure, a combustor temperature, a combustor mass flow rate and composition of combusted gases; estimating, by the GTPOS via the one or more hardware processors, turbine output data associated with exhaust gases of a turbine of the gas turbine based, at least in part, on the compressor outlet mass flow rate, the outlet pressure, the outlet temperature and the outlet velocity, the combustor output data, and the turbine associated input data; determining, by the GTPOS via the one or more hardware processors, an estimated value associated with each steady state gas turbine performance parameter of the one or more steady state gas turbine performance parameters based, at least in part, on the compressor outlet mass flow rate, the outlet pressure, the outlet temperature, the outlet velocity, the combustor output data, and the turbine output data; determining, by the GTPOS via the one or more hardware processors, an estimated value associated with each transient gas turbine state variable of the one or more transient gas turbine state variables based on the estimated value associated with each steady state gas turbine performance parameter using one or more transient gas turbine component models, the one or more transient gas turbine component models are accessed from a model database, wherein the one or more transient gas turbine component models comprise one of: one or more physics-based models, and one or more data-driven models; determining, by the GTPOS via the one or more hardware processors, whether estimated value of each transient gas turbine state variable of the one or more transient gas turbine state variables is within predefined threshold limits defined for the respective transient gas turbine state variable; upon determining that estimated value for each transient gas turbine state variable of the one or more transient gas turbine state variables is not within the predefined threshold limits defined for the respective transient gas turbine state variable, solving, by the GTPOS via the one or more hardware processors, a process optimization problem to identify optimal process settings that maintain estimated value of each transient gas turbine state variable within the predefined threshold limits defined for the respective transient gas turbine state variable; and displaying, by the GTPOS via the one or more hardware processors, the optimal process settings.

In another aspect, there is provided a gas turbine performance optimization system (GTPOS) for accurately predicting and optimizing performance of gas turbines. The system comprises a memory storing instructions; one or more communication interfaces; and one or more hardware processors coupled to the memory via the one or more communication interfaces, wherein the one or more hardware processors are configured by the instructions to: receive real-time sensor data and non-real time data from one or more data sources; pre-process the real-time sensor data, and the non-real time data to obtain preprocessed data; estimate one or more process parameters associated with a gas turbine based on the preprocessed data using one or more soft sensors; generate input data associated with the gas turbine by combining the one or more process parameters and the preprocessed data, wherein the input data comprises one or more of: compressor associated input data, combustor associated input data, turbine associated input data, and gas turbine performance data, wherein the compressor associated input data comprises an inlet mass flow rate, an inlet temperature, an inlet pressure, an inlet guide vane (IGV) angle, and a shaft rotational speed, wherein the gas turbine performance data comprises a real-time value associated with each steady state gas turbine performance parameter of one or more steady state gas turbine performance parameters and a real-time value associated with each transient gas turbine state variable of one or more transient gas turbine state variables; determine an outlet mass flow rate, an outlet pressure, an outlet temperature, and an outlet velocity for each stage of one or more stages of the compressor using the compressor associated input data and a compressor cross section area by iteratively performing: estimating a Mach number of a first stage of the one or more stages based, at least in part, on the compressor cross section area, the IGV angle, a real gas constant, a specific heat constant ratio and one or more pre-determined gas turbine tuning parameters using a predefined Mach number calculation formula, wherein the one or more pre-determined gas turbine tuning parameters and the real gas constant are accessed from a knowledge database, wherein the specific heat constant ratio is determined based on the inlet temperature; determining whether the estimated Mach number is below a predefined Mach number; upon determining that the Mach number is below the predefined Mach number, estimating a relative flow coefficient for the first stage based, at least in part on, the estimated Mach number, the inlet mass flow rate, the inlet temperature, the inlet pressure, the shaft rotational speed, the specific heat constant ratio, and the one or more pre-determined gas turbine tuning parameters; determining a relative pressure coefficient for the first stage based on the relative flow coefficient using one or more non-dimensional characteristics plots and the one or more pre-determined gas turbine tuning parameters, wherein the one or more non-dimensional characteristics plots are accessed from the knowledge database; determining an efficiency of the first stage based, at least in part, on the relative pressure coefficient, the relative flow coefficient, and the one or more non-dimensional characteristics plots; estimating the outlet mass flow rate, the outlet pressure, the outlet temperature, and the outlet velocity for the first stage based, at least in part, on the relative flow coefficient, the relative pressure coefficient, the efficiency, and the Mach number; identifying the outlet mass flow rate as the inlet mass flow rate, the outlet pressure as the inlet pressure, the outlet temperature as the inlet temperature, and a next stage of the one or more stages as the first stage, until all the stages in the one or more stages are identified; estimate combustor output data associated with combusted gases of the gas turbine based, at least in part, on the outlet mass flow rate, the outlet pressure, the outlet temperature and the outlet velocity, and the combustor associated input data, the combusted output data comprising a combustor pressure, a combustor temperature, a combustor mass flow rate and composition of combusted gases; estimate turbine output data associated with exhaust gases of a turbine of the gas turbine based, at least in part, on the compressor outlet mass flow rate, the outlet pressure, the outlet temperature and the outlet velocity, the combustor output data, and the turbine associated input data; determine an estimated value associated with each steady state gas turbine performance parameter of the one or more steady state gas turbine performance parameters based, at least in part, on the compressor outlet mass flow rate, the outlet pressure, the outlet temperature, the outlet velocity, the combustor output data, and the turbine output data; determine an estimated value associated with each transient gas turbine state variable of the one or more transient gas turbine state variables based on the estimated value associated with each steady state gas turbine performance parameter using one or more transient gas turbine component models, the one or more transient gas turbine component models are accessed from a model database, wherein the one or more transient gas turbine component models comprise one of: one or more physics-based models, and one or more data-driven models; determine whether estimated value of each transient gas turbine state variable of the one or more transient gas turbine state variables is within predefined threshold limits defined for the respective transient gas turbine state variable; upon determining that estimated value for each transient gas turbine state variable of the one or more transient gas turbine state variables is not within the predefined threshold limits defined for the respective transient gas turbine state variable, solve a process optimization problem to identify optimal process settings that maintain estimated value of each transient gas turbine state variable within the predefined threshold limits defined for the respective transient gas turbine state variable; and display the optimal process settings.

In yet another aspect, there are provided one or more non-transitory machine-readable information storage mediums comprising one or more instructions which when executed by one or more hardware processors cause a method for accurately predicting and optimizing performance of gas turbines. The method comprises receiving, by a gas turbine performance optimization system (GTPOS) via one or more hardware processors, real-time sensor data and non-real time data from one or more data sources; pre-processing, by the GTPOS via the one or more hardware processors, the real-time sensor data, and the non-real time data to obtain preprocessed data; estimating, by the GTPOS via the one or more hardware processors, one or more process parameters associated with a gas turbine based on the preprocessed data using one or more soft sensors; generating, by the GTPOS via the one or more hardware processors, input data associated with the gas turbine by combining the one or more process parameters and the preprocessed data, wherein the input data comprises one or more of: compressor associated input data, combustor associated input data, turbine associated input data, and gas turbine performance data, wherein the compressor associated input data comprises an inlet mass flow rate, an inlet temperature, an inlet pressure, an inlet guide vane (IGV) angle, and a shaft rotational speed, wherein the gas turbine performance data comprises a real-time value associated with each steady state gas turbine performance parameter of one or more steady state gas turbine performance parameters and a real-time value associated with each transient gas turbine state variable of one or more transient gas turbine state variables; determining, by the GTPOS via the one or more hardware processors, an outlet mass flow rate, an outlet pressure, an outlet temperature, and an outlet velocity for each stage of one or more stages of the compressor using the compressor associated input data and a compressor cross section area by iteratively performing: estimating, by the GTPOS via the one or more hardware processors, a Mach number of a first stage of the one or more stages based, at least in part, on the compressor cross section area, the IGV angle, a real gas constant, a specific heat constant ratio and one or more pre-determined gas turbine tuning parameters using a predefined Mach number calculation formula, wherein the one or more pre-determined gas turbine tuning parameters and the real gas constant are accessed from a knowledge database, wherein the specific heat constant ratio is determined based on the inlet temperature; determining, by the GTPOS via the one or more hardware processors, whether the estimated Mach number is below a predefined Mach number; upon determining that the Mach number is below the predefined Mach number, estimating, by the GTPOS via the one or more hardware processors, a relative flow coefficient for the first stage based, at least in part on, the estimated Mach number, the inlet mass flow rate, the inlet temperature, the inlet pressure, the shaft rotational speed, the specific heat constant ratio, and the one or more pre-determined gas turbine tuning parameters; determining, by the GTPOS via the one or more hardware processors, a relative pressure coefficient for the first stage based on the relative flow coefficient using one or more non-dimensional characteristics plots and the one or more pre-determined gas turbine tuning parameters, wherein the one or more non-dimensional characteristics plots are accessed from the knowledge database; determining, by the GTPOS via the one or more hardware processors, an efficiency of the first stage based, at least in part, on the relative pressure coefficient, the relative flow coefficient, and the one or more non-dimensional characteristics plots; estimating, by the GTPOS via the one or more hardware processors, the outlet mass flow rate, the outlet pressure, the outlet temperature, and the outlet velocity for the first stage based, at least in part, on the relative flow coefficient, the relative pressure coefficient, the efficiency, and the Mach number; and identifying, by the GTPOS via the one or more hardware processors, the outlet mass flow rate as the inlet mass flow rate, the outlet pressure as the inlet pressure, the outlet temperature as the inlet temperature, and a next stage of the one or more stages as the first stage, until all the stages in the one or more stages are identified; estimating, by the GTPOS via the one or more hardware processors, combustor output data associated with combusted gases of the gas turbine based, at least in part, on the outlet mass flow rate, the outlet pressure, the outlet temperature and the outlet velocity, and the combustor associated input data, the combusted output data comprising a combustor pressure, a combustor temperature, a combustor mass flow rate and composition of combusted gases; estimating, by the GTPOS via the one or more hardware processors, turbine output data associated with exhaust gases of a turbine of the gas turbine based, at least in part, on the compressor outlet mass flow rate, the outlet pressure, the outlet temperature and the outlet velocity, the combustor output data, and the turbine associated input data; determining, by the GTPOS via the one or more hardware processors, an estimated value associated with each steady state gas turbine performance parameter of the one or more steady state gas turbine performance parameters based, at least in part, on the compressor outlet mass flow rate, the outlet pressure, the outlet temperature, the outlet velocity, the combustor output data, and the turbine output data; determining, by the GTPOS via the one or more hardware processors, an estimated value associated with each transient gas turbine state variable of the one or more transient gas turbine state variables based on the estimated value associated with each steady state gas turbine performance parameter using one or more transient gas turbine component models, the one or more transient gas turbine component models are accessed from a model database, wherein the one or more transient gas turbine component models comprise one of: one or more physics-based models, and one or more data-driven models; determining, by the GTPOS via the one or more hardware processors, whether estimated value of each transient gas turbine state variable of the one or more transient gas turbine state variables is within predefined threshold limits defined for the respective transient gas turbine state variable; upon determining that estimated value for each transient gas turbine state variable of the one or more transient gas turbine state variables is not within the predefined threshold limits defined for the respective transient gas turbine state variable, solving, by the GTPOS via the one or more hardware processors, a process optimization problem to identify optimal process settings that maintain estimated value of each transient gas turbine state variable within the predefined threshold limits defined for the respective transient gas turbine state variable; and displaying, by the GTPOS via the one or more hardware processors, the optimal process settings.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.

FIG. 2 illustrates an exemplary block diagram of a gas turbine performance optimization system (GTPOS) for accurately predicting and optimizing performance of gas turbines, in accordance with an embodiment of the present disclosure.

FIG. 3A illustrates a schematic block diagram representation of processors associated with the system of FIG. 2 or the GTPOS of FIG. 1 for accurately predicting and optimizing performance of gas turbines, in accordance with an embodiment of the present disclosure.

FIG. 3B illustrates a schematic block diagram representation of a prediction module associated with the system of FIG. 2 or the GTPOS of FIG. 1 for accurately predicting and optimizing performance of gas turbines, in accordance with an embodiment of the present disclosure.

FIGS. 4A to 4E, collectively, illustrate an exemplary flow diagram of a method for accurately predicting and optimizing performance of the gas turbines using the system of FIG. 2 and the GTPOS of FIG. 1, in accordance with an embodiment of the present disclosure.

FIG. 5 illustrates a schematic block diagram representation of a design point calibration process followed for calibrating a compressor, in accordance with an embodiment of the present disclosure.

FIG 6 is a graphical representation illustrating comparison of compressor performance estimation with experimental results at multiple operating conditions, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

A gas turbine is a thermomechanical system that involves a plurality of components, including some major components, such as compressor, combustor, and turbine components. The compressor further includes a series of blades that are mounted on a shaft (also referred to as rotor vanes) and an outer casing (also referred to as stator vanes). The rotor and the stator vanes in the compressor compresses an inlet fluid (such as air, steam, gas etc.) by transferring energy to the inlet fluid to increase pressure and temperature of the inlet fluid. The compressed fluid is then mixed with fuel and combusted in a combustor chamber to generate an outlet gas at high temperature (i.e., more than 1500°C). Thereafter, the high temperature and pressure gas is expanded in the turbine component of the gas turbine converting the kinetic energy of the gas into work. Some part of the generated work is used by the compressor to compress the inlet fluid, while the remaining work is used by an auxiliary system to generate electricity, thrust force, or propulsion etc., depending on the end requirement.

Due to the complex nature of gas turbine operation, developing a physics-based model that captures nonlinear physico-chemical phenomena taking place in all the components of the gas turbine is quiet challenging. Further, to come up with a framework/system that can predict and optimize the performance of the gas turbine, one needs to have an in-depth knowledge of the underlying physics and dynamic behavior of the complex system. As the gas turbine design and dynamic performance information is usually confidential and proprietary to the Original Equipment Manufacturers (OEMs), it is not possible in the current setup to develop such an optimization framework/system. Also, models for accurate off-design performance prediction are limited and lacks accuracy especially near the surge and choke lines.

Some of the prior arts that are available for predicting performance of the gas turbine generally perform their analysis at the design operating line. Their performance at other operating points is either not specified or not satisfactory. Also, the current technology does not specify the means to identify choking or surging conditions as the surge margin plays an important role in optimizing the operation of gas turbines.

Further, the introduction of greener fuels into gas turbines is likely to make the already complex system more dynamic and requires newer stable operating regimes. Predicting the performance of the gas turbine in the newer operating regimes require knowledge of gas turbine system modelling and chemical kinetics modelling.

Embodiments of the present disclosure overcome the above-mentioned technical problems by providing systems and methods that accurately predict and optimize performance of gas turbines by accurately estimating the performance of the compressor in a wide range of operating regions including near the surge and choke conditions. The system also performs process optimization for optimal operation for wide variety of fuels using the performance of the compressor in a wide range of operating region. The system and method of the present disclosure first obtain reference conditions, such as mass flow rate, inlet temperature, inlet pressure, inlet guide vane angle, and rotational speed of shaft for stage one (i.e., at inlet) of the compressor from design point specifications provided by the OEMs. It should be noted that the one set of rotor and stator vanes is considered as a single stage of the compressor and the compressor includes one or more stages. Thereafter, the reference conditions obtained for stage one are used by the system to determine Mach numbers, relative pressure coefficient, relative flow coefficient, efficiency, outlet mass flow rate, outlet pressure, outlet temperature, and outlet velocity of stage one of the compressor. The output obtained at the stage one is then be used by the system as an input for next stage and the same process is repeated till output of the last stage of the compressor is determined. This way, the system may obtain the performance of the compressor at different inlet conditions by using different reference conditions.

Further, the system uses the output of the last stage of the compressor obtained for a particular input condition to determine output data associated with the combustor as well as the turbine component of the gas turbine. The system then uses the output of the last stage of the compressor and the output data associated with the combustor and the turbine component to determine one or more steady state gas turbine performance parameters that are further utilized to estimate one or more transient gas turbine state variables using one or more transient gas turbine component models. Once the transient gas turbine state variables are available, the system determines whether estimated value of each transient gas turbine state variable of the one or more transient gas turbine state variables is within predefined threshold limits defined for the respective transient gas turbine state variable. Upon determining that the estimated value for each transient gas turbine state variable is not within the predefined threshold limits defined for the respective transient gas turbine state variable, the system solves a process optimization problem to identify optimal process settings for the gas turbine that may maintain estimated value of each transient gas turbine state variable within the predefined threshold limits defined for the respective transient gas turbine state variable. The identified optimal process settings are then displayed to an operator of the gas turbine.

Additionally, once the system obtains the performance of the compressor at different input conditions, the system creates compressor performance plots using mass flow rate or relative mass flow rate on the x-axis and the pressure ratio on the y-axis for different rotation speeds. The compressor performance plots may then be used by the system to identify surge and choke points at each stage of the compressor for different inlet conditions.

In the present disclosure, the system and the method perform real-time multi-objective optimization of the gas turbine to identify optimal process settings that are recommended to the operators of the gas turbine, thereby maximizing the thermal efficiency of the gas turbine while minimizing the fuel consumption, emissions and operating cost. The system also estimates key gas turbine variables that cannot be measured using physical sensors in real time, or that are not readily available for real-time processing, thereby making the process operation more visible and controllable. Further, the system ensures that the performance of the compressor is accurately predicted at all operating points, thereby ensuring accurate identification of the choke and surge points at off design conditions as well.

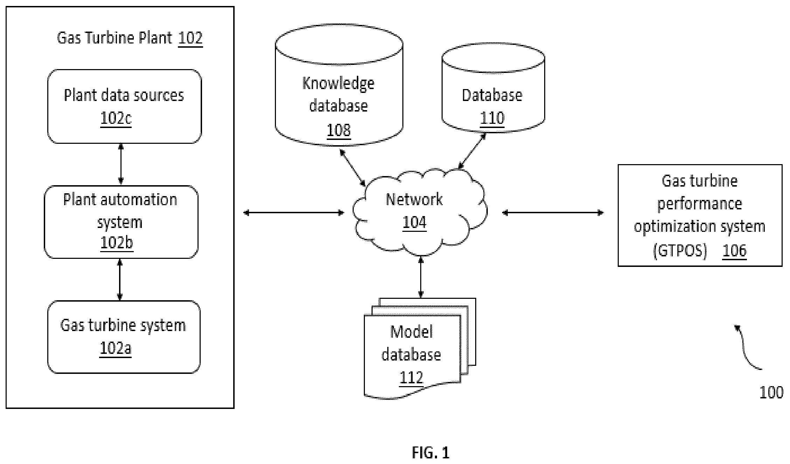

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, estimating output data associated with compressor, combustor, and turbine component of a gas turbine system, determining optimal process settings, etc. The environment 100 generally includes a gas turbine plant 102, a gas turbine performance optimization system (hereinafter referred as 'GTPOS') 106, a knowledge database 108, a database 110 and a model database 112, each coupled to, and in communication with (and/or with access to) a network 104.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The gas turbine plant 102 includes a gas turbine system 102a, a plant automation system 102b and plant data sources 102c. The gas turbine system 102a is a thermomechanical equipment (basically a type of an internal combustion engine) that can be used in a plurality of modes in a plurality of auxiliary systems, such as aircrafts, trains, ships, electrical generators, pumps, gas compressors, and tanks. In an embodiment, the gas turbine system 102a includes a compressor, a combustor, and a turbine component that work together to enable work generation. The generated work is then used in an auxiliary system to generate electricity, thrust force, propulsion etc., depending on the end requirement. The plant automation system 102b is configured to manage the working of the gas turbine system 102a. In an embodiment, the plant automation system 102b includes a dynamic control system for maintaining performance of the gas turbine system 102a at a desired level based on inputs received from external sources (e.g., power grid), the plant data sources 102c or recommendations received from the GTPOS 106. In one embodiment, a user/an operator may manage the control system for maintaining the performance of the gas turbine system 102a at the desired level. The plant data sources 102c store real time and non-real time data associated with the gas turbine system 102a, such as power demand, sensor data, fuel properties, set points of component variables etc. In one embodiment, the plant data sources 102c include a sensor database, an environment database, and a laboratory database. The sensor database is configured to store sensor data recorded in real-time by one or more sensors present in the gas turbine system 102a. The environment database is configured to store real-time environment conditions like humidity, temperature, and pressure of ambient air entering the gas turbine system 102a. The laboratory database is configured to store composition of the surrounding air, chemical composition of fuel used in the gas turbine system 102a, energy density of fuel, and properties such as density, specific heat capacity, molecular weight, real gas constant, calorific value etc., of air and fuel.

In an embodiment, the knowledge database 108 stores information, such as specification, dimensions, and the like associated with various components of the gas turbine system 102a, such as generators, fans, filters, pipelines, etc. The knowledge database 108 also stores one or more pre-determined gas turbine tuning parameters and one or more non-dimensional characteristics plots associated with the compressor. The non-dimensional characteristics plots are compressor plots showing relations obtained between one or more non-dimensional parameters, such as flow coefficient, pressure coefficient and efficiency coefficient of a plurality of compressors. It should be noted that the non-dimensional characteristics plots stored in the knowledge database 108 are plots already existing in the art. In one embodiment, the knowledge database 108 also store maintenance information of the gas turbine systems, engineering and design documents related to various component of the gas turbine systems, compressor cross section area information, standard operation procedures, hazard, and operability study (HAZOP) documents, etc. The maintenance information and the stored information may help the GTPOS 106 in understanding the effect of various maintenance operations on the performance of the gas turbine system 102a.

The database 110 stores historical, real-time sensor data and preprocessed data, such as performance data of gas turbine systems (e.g., the gas turbine system 102a), inlet mass flow rates, pressures, temperatures, efficiencies, etc., and data from the environment and the laboratory databases associated with gas turbine plants (e.g., the gas turbine plant 102). In an embodiment, the preprocessed data and the pre-determined gas turbine tuning parameters may be utilized by the GTPOS 106 for calibrating the gas turbine system 102a.

The model database 112 stores one or more steady state and transient gas turbine state component models, such as models associated with the compressor, combustor, turbine, turbine cooler, generators, fans, filters, pipelines, and other components of the gas turbine systems. The one or more steady state and transient gas turbine state component models that are stored can be physics-based models and data-driven models. The physics based models include detailed dynamic differential equations and algebraic equation based on laws of conservation for the compressor, combustor, turbine, turbine cooler, generators, fans, filters, pipelines etc. The data-driven models include statistical, machine learning and deep learning models that are developed to map input-output relations of the compressor, combustor, turbine, turbine cooler, generators, fans, filters, pipelines etc. In one embodiment, the model database 112 also stores one or more models for estimating a predictive performance quality index and a model quality index, and pre-defined predictive performance quality index thresholds and pre-defined model quality index thresholds.

The gas turbine performance optimization system (GTPOS) 106 includes one or more hardware processors, and a memory. The GTPOS 106 is configured to perform one or more of the operations described herein. The GTPOS 106 is configured to receive real-time sensor data and non-real time data from the gas turbine plant 102 using the network 106. In particular, the GTPOS 106 receives the real-time sensor data and the non-real time data from one or more data sources, such as the sensor database, the environment database, and the laboratory database present in the plant data sources 102c of the gas turbine plant 102. In an embodiment, the real-time sensor data includes real-time values obtained from one or more sensors present in the compressor, the combustor, and the turbine components of the gas turbine system 102a. Examples of the real-time sensor data include ambient conditions, such as temperature, humidity, etc., process variables, such as pressures and temperatures at various locations in components of the gas turbine system 102a, emissions, cooling flow rate and pressure etc., control variables, such as turbine inlet temperature, power generation, rotation speed etc., component variables, such as IGV angles, mass flow rate of air and fuel etc. The non-real time data includes calorific value, density, chemical composition of the fuel, composition of the surrounding air, etc.

The GTPOS 106 is then configured to pre-process the real-time sensor data, and the non-real time data to obtain preprocessed data that is further utilized to estimate one or more process parameters associated with the gas turbine system 102a using one or more soft sensors. In an embodiment, the one or more soft sensors can be one of a physics based soft sensors and data driven soft sensors. Examples of soft sensors include power generated by gas turbine, relative humidity of inlet fluid after humidification, turbine inlet temperature, and flow rate of turbine cooling air. Thereafter, the GTPOS 106 is configured to generate input data associated with the gas turbine system 102a by combining the one or more process parameters and the preprocessed data. The input data includes one or more of compressor associated input data, combustor associated input data, turbine associated input data, and gas turbine performance data.

Further, the GTPOS 106 is configured to estimate an outlet mass flow rate, an outlet pressure, an outlet temperature, and an outlet velocity for each stage of one or more stages of the compressor present in the gas turbine system 102a using the compressor associated input data and a compressor cross section area. It should be noted that outlet conditions (e.g., the outlet mass flow rate, the outlet pressure, the outlet temperature, and the outlet velocity) determined for a first stage is used as an input for a next stage and the same process is repeated till outlet conditions of the last stage of the compressor are determined. The estimated outlet mass flow rate, the outlet pressure, the outlet temperature, and the outlet velocity of the last stage of the compressor is then utilized by the GTPOS 106 along with the combustor associated input data for estimating combustor output data associated with the combustor of the gas turbine system 102a. Thereafter, GTPOS 106 estimates turbine output data associated with exhaust gases of the turbine component of the gas turbine system 102a based on the outlet conditions estimated for the compressor, the combustor output data, and the turbine associated input data.

Once the outlet conditions of the compressor, the combustor output data, and the turbine output data are estimated, the GTPOS 106 uses them to determine an estimated value associated with each steady state gas turbine performance parameter of the one or more steady state gas turbine performance parameters, such as generated power, thrust, output heat etc. Thereafter, the GTPOS 106 accesses one or more transient gas turbine component models to determine estimated value associated with each transient gas turbine state variable of the one or more transient gas turbine state variables based on the estimated value determined for each steady state gas turbine performance parameter. Examples of the one or more transient gas turbine state variables include, but are not limited to, compressor outlet pressure, combusted gas temperature (also referred as turbine inlet temperature), exhaust mass flow rate, exhaust gas temperature, rotational speed of gas turbine, generated power, generated thrust, output heat and pollutants (e.g., carbon dioxide, nitrogen oxides, and sulfur oxides) in exhaust gas. Additionally, the GTPOS 106 checks whether the estimated value of each transient gas turbine state variable is within predefined threshold limits defined for the respective transient gas turbine state variable.

Upon determining that the estimated value for one or more transient gas turbine state variables is not within the predefined threshold limits defined for the respective transient gas turbine state variable, the GTPOS 106 solves a process optimization problem to identify optimal process settings which when implemented will maintain estimated value of each transient gas turbine state variable within the predefined threshold limits defined for the respective transient gas turbine state variable. It should be noted that the process optimization problem is a multi-objective process optimization problem and can have one or more objective functions and the one or more constraint functions that can change from time to time depending on the requirement from operators and/or demand from the grid. In an embodiment, the one or more objective functions include maximization of thermal efficiency, and minimization of fuel consumption, emissions and cost of operation of the gas turbine system 102a. The one or more constraint functions include physical and safe limits of operation (e.g., upper limit of turbine inlet temperature, air to fuel ratio, surge points, choke points, etc.), emission norms, generated power, and frequency of generated power. So, the optimal process settings that are determined for one process optimization problem may not work as the optimal settings for another process optimization problem. In one embodiment, the optimal process settings include set points of percentage openings for one or more fuel control valves, IGV angle, turbine cooling flow rate, percentage opening of steam control valves, humidification water flow rate and composition of fuel mixture.

Once the optimal process settings are identified, the GTPOS 106 may direct the optimal process settings to the dynamic control system provided in the plant automation system 102b using the network 104. The plant automation system 102b may then implement the suggested optimal process settings or may display the optimal process settings to the user/operator of the dynamic control system. The user/operator may then use the suggested optimal process settings for optimizing the operation of the gas turbine system 102a.

In an embodiment, the GTPOS 106 is configured to estimate compressor outlet conditions for one or more sets of compressor associated input data. The estimated compressor outlet conditions may then be used by the GTPOS 106 to create a compressor performance map that is further utilized to identify surge point for each new compressor associated input data.

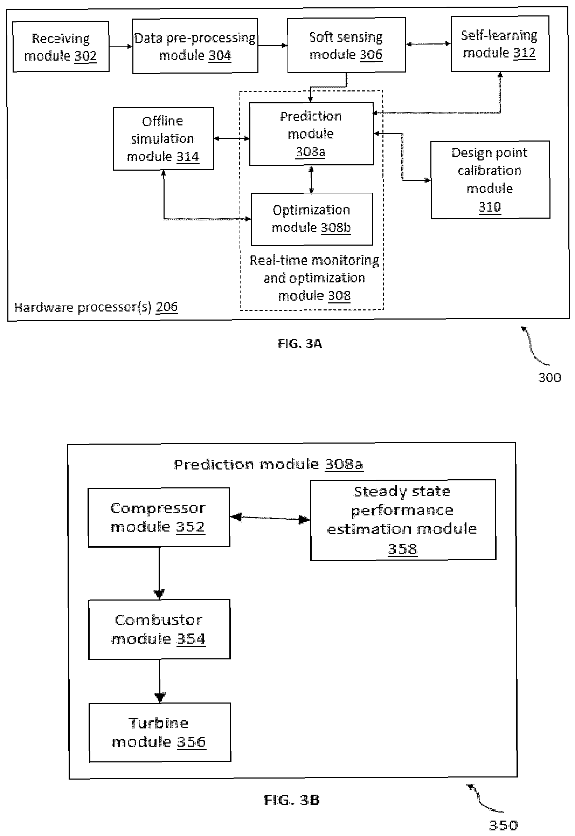

In at least one example embodiment, the GTPOS 106 is also configured to identify the choke point for each stage of the one or more stages of the compressor. The process of identifying the choke point for each stage of the compressor is explained in detail with reference to FIG. 3.

The number and arrangement of systems, plants, and/or networks shown in FIG. 1 are provided as an example. There may be additional systems, plants, and/or networks; fewer systems, plants, and/or networks; different systems, plants, and/or networks; and/or differently arranged systems, plants, and/or networks than those shown in FIG. 1. Furthermore, two or more systems shown in FIG. 1 may be implemented within a single system, or a single system shown in FIG. 1 may be implemented as multiple, distributed systems. Additionally, or alternatively, a set of systems (e.g., one or more systems) of the environment 100 may perform one or more functions described as being performed by another set of systems of the environment 100 (e.g., refer scenarios described above).

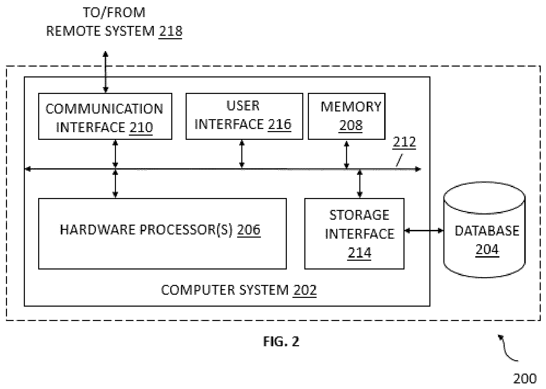

FIG. 2 illustrates an exemplary block diagram of a gas turbine performance optimization system (GTPOS) 200 for accurately predicting and optimizing performance of gas turbines, in accordance with an embodiment of the present disclosure. In an embodiment, the gas turbine performance optimization system (GTPOS) may also be referred as system and may be interchangeably used herein. The system 200 is similar to the GTPOS 106 explained with reference to FIG. 1. In some embodiments, the system 200 is embodied as a cloud-based and/or SaaS-based (software as a service) architecture. In some embodiments, the system 200 may be implemented in a server system. In some embodiments, the system 200 may be implemented in a variety of computing systems, such as laptop computers, notebooks, hand-held devices, workstations, mainframe computers, and the like.

The GTPOS 200 includes a computer system 202 and a system database 204. The computer system 202 includes one or more processors 206 for executing instructions, a memory 208, a communication interface 210, and a user interface 216 that communicate with each other via a bus 212.

The memory 208 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the system database 204 can be stored in the memory 208, wherein the system database 204 may comprise, but are not limited to, optimized process settings for gas turbines that are identified using the system 200, and a pre-defined predictive performance quality index threshold, a pre-defined model quality index threshold, and the like. The memory 208 further comprises (or may further comprise) information pertaining to input(s)/output(s) of each step performed by the systems and methods of the present disclosure. In other words, input(s) fed at each step and output(s) generated at each step are comprised in the memory 208 and can be utilized in further processing and analysis.

In some embodiments, the system database 204 is integrated within computer system 202. For example, the computer system 202 may include one or more hard disk drives as the system database 204. A storage interface 214 is any component capable of providing the one or more processors 206 with access to the system database 204. The storage interface 214 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the one or more processors 206 with access to the system database 204. In one embodiment, the system database 204 is similar to the database 110 explained with reference to FIG. 1.

The one or more processors 206 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory 208.

The memory 208 includes suitable logic, circuitry, and/or interfaces to store a set of computer readable instructions for performing operations. Examples of the memory 208 include a random-access memory (RAM), a read-only memory (ROM), a removable storage drive, a hard disk drive (HDD), and the like. It will be apparent to a person skilled in the art that the scope of the disclosure is not limited to realizing the memory 208 in the GTPOS 200, as described herein. In another embodiment, the memory 208 may be realized in the form of a database server or a cloud storage working in conjunction with the GTPOS 200, without departing from the scope of the present disclosure.

The one or more processors 206 are operatively coupled to the communication interface 210 such that the one or more processors 206 communicate with a remote system 218 such as, the gas turbine plant 102, or communicated with any entity (for e.g., the knowledge database 108, the database 110 and the model database 112) connected to the network 104. Further, the one or more processors 206 are operatively coupled to the user interface 216 for interacting with users, such as the user/operator of the control system present in the gas turbine plant 102 who is responsible for maintaining the performance of the gas turbine system 102a as per the end requirement.

It is noted that the GTPOS 200 as illustrated and hereinafter described is merely illustrative of a system that could benefit from embodiments of the present disclosure and, therefore, should not be taken to limit the scope of the present disclosure. It is noted that the GTPOS 200 may include fewer or more components than those depicted in FIG. 2.

FIG. 3A, with reference to FIGS. 1 and 2, illustrates a schematic block diagram representation 300 of the processors 206 associated with the system 200 of FIG. 2 or the GTPOS of FIG. 1 for accurately predicting and optimizing the performance of gas turbines, such as the gas turbine system 102a, in accordance with an embodiment of the present disclosure.

In one embodiment, the one or more processors 206 includes a receiving module 302, a data pre-processing module 304, a soft sensing module 306, a real-time monitoring and optimization module 308, a design point calibration module 310, a self-learning module 312 and an offline simulation module 314.

The receiving module 302 includes suitable logic and/or interfaces for receiving real-time sensor data and non-real time data from one or more data sources, such as the sensor database, the environment database, and the laboratory database present in the plant data sources 102c of the gas turbine plant 102.

The data pre-processing module 304 is in communication with the receiving module 302. The data pre-processing module 304 includes suitable logic and/or interfaces for receiving the real-time sensor data and the non-real time data received by the receiving module 302. In an embodiment, the data pre-processing module 304 is configured to process the received data i.e., the real-time sensor data and the non-real time data. In one embodiment, the data pre-processing module 304 may perform a plurality of operations, such as removing outliers and spurious values, performing domain based data filtering, imputing the missing or unrecorded values, converting data type from text to numeric or vice versa, unifying sampling frequency, introducing appropriate process lags in the data, combining data from multiple data sources based on the timestamps etc., on the received data to obtain preprocessed data i.e., the clean data.

The soft sensing module 306 is in communication with the data pre-processing module 304. The soft sensing module 306 is configured to estimate one or more process parameters associated with the gas turbine system 102a based on the preprocessed data using one or more soft sensors. The one or more process parameters that are estimated by the soft sensing module 306 are parameters that cannot be directly measured through instruments/physical sensors, such as efficiency, Reynolds numbers, turbine inlet temperature, relative humidity of inlet fluid and the like.

The real-time monitoring and optimization module 308 is in communication with the soft sensing module 306. The real-time monitoring and optimization module 308 is configured to generate input data associated with the gas turbine system 102a by combining the one or more process parameters that are estimated by the soft sensing module 306 and the preprocessed data provided by the data pre-processing module 304. The input data includes one or more of a compressor associated input data, a combustor associated input data, a turbine associated input data, and a gas turbine performance data.

In an embodiment, the compressor associated input data includes an inlet mass flow rate, an inlet temperature, an inlet pressure, an inlet guide vane (IGV) angle, and a shaft rotational speed. The combustor associated input data includes fuel mass flow rate, fuel composition, fuel temperature, combusted gas temperature, and combusted gas pressure. The turbine associated input data includes gas mass flow rate, gas temperature, coolant mass flow rate, and coolant temperature. The gas turbine performance data includes a real-time value associated with each steady state gas turbine performance parameter of the one or more steady state gas turbine performance parameters and a real-time value associated with each transient gas turbine state variable of the one or more transient gas turbine state variables.

In an embodiment, the real-time monitoring and optimization module 308 includes a prediction module 308a and an optimization module 308b. The prediction module 308a is configured to estimate the performance of the gas turbine system 102a using the one or more component models present in the model database 112. In particular, the prediction module 308a is configured to estimate one or more key parameters that are not readily available in real time like compressor exit pressure and temperature, cooling fluid flow rates, turbine intermediate stage temperatures, exhaust gas compositions, etc. The accurate estimation of the one or more key parameters helps in generating the compressor performance map that further helps in accurate prediction and optimization of the operation of the gas turbine system 102a for a particular type of fuel, ambient conditions and operating requirements considering surge and choke margins. In one embodiment, the prediction module 308a also uses the estimated parameters to determine an estimated value associated with each steady state gas turbine performance parameter and an estimated value associated with each transient gas turbine state variable. The prediction module 308a is explained in detail with reference to FIG. 3B.

In one embodiment, the optimization module 308b is configured to obtain one or more estimated parameters from the prediction module 308a. The estimated parameters are then utilized by one or more solvers, algorithms and frameworks present in the optimization module 308b for performing optimization of operating points of the gas turbine system 102a.

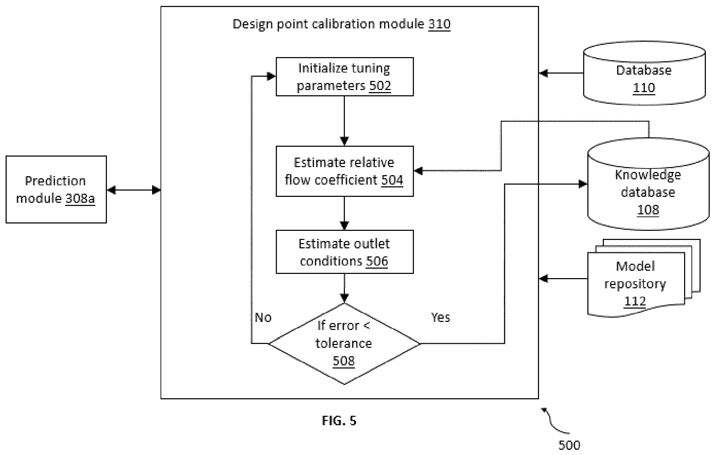

The design point calibration module 310 is in communication with the real-time monitoring and optimization module 308. The design point calibration module 310 is configured to perform design point calibration for tuning one or more pre-determined gas turbine tuning parameters in case the estimated values of the one or more steady state gas turbine process parameters deviate significantly from measured or experimental values. In an embodiment, the design point calibration module 310 is configured to compute a prediction performance quality index by comparing estimated values of the one or more steady state gas turbine process parameters with real-time values of the one or more steady state gas turbine process parameters. The prediction performance quality index includes one or more statistical measures that are computed between the estimated and real-time values of steady state gas turbine process parameters. In one embodiment, the one or more statistical measures include one or more of a mean absolute error (MAE), a root mean square error (RMSE) and a mean absolute percentage error (MAPE). The design point calibration module 310 is also configured to determine whether the computed predictive performance quality index is below a pre-defined predictive performance quality index threshold. Upon determining that the prediction performance quality index for the steady state gas turbine process parameters of the compressor, specifically the pressure ratio after the last stage of the compressor falls below the pre-defined predictive performance quality index threshold, the design point calibration module 310 is configured to tune the pre-determined gas turbine tuning parameters, such as shape factor, inlet Mach number and tangential velocity to reduce error between the predicted performance i.e., estimated values of the parameters and the real-time values of the parameters using the design point calibration process that is explained in detail with reference to FIG. 5.

The self-learning module 312 is in communication with the soft sensing module 306 and the real-time monitoring and optimization module 308. The self-learning module 312 is configured to initiate self-learning or model update of the one or more transient gas turbine component models in case the estimated values of the one or more transient gas turbine state variables deviate significantly from real-time values of the one or more transient gas turbine state variables. In an embodiment, the self-learning module 312 is configured to compute a model quality index by comparing estimated values of the one or more transient gas turbine state variables with real-time values of the one or more transient gas turbine state variables. The model quality index includes one or more statistical measures that are computed between the estimated and real-time values of the one or more transient gas turbine state variables. In one embodiment, the one or more statistical measures include one or more of a MAE, a RMSE and a MAPE. The self-learning module 312 is also configured to determine whether the computed model quality index is below a pre-defined model quality index threshold. Upon determining that the computed model quality index is below the pre-defined model quality index threshold, self-learning module 312 is configured to initiate self-learning of one or more transient gas turbine component models. In at least one example embodiment, the self-learning is performed based on a type of transient gas turbine component model. For example, in case of physics-based models, the self-learning is performed by retuning the parameters of the transient gas turbine component models by minimizing prediction error over the input data. In case of data-driven models, the self-learning is performed either by retuning the hyperparameters and rebuilding the transient gas turbine component models or by changing the underlying learning technique in order to minimize the prediction error over the input data. The self-learning of the one or more transient gas turbine component models may help in optimization of the gas turbine system 102a.

The offline simulation module 312 is in communication with the real-time monitoring and optimization module 308. The offline simulation module 312 is configured to perform virtual experiments to check behavior of the gas turbine system 102a under various operating conditions. In an embodiment, results of the virtual experiments performed by the offline simulation module 312 may be used to validate and finetune the recommendations received from the real-time monitoring and optimization module 308. In a non-limiting example, the offline simulation module can estimate how the gas turbine system 102a will respond if a new fuel is introduced or if the inlet mass flow rate is increased etc. In particular, the offline simulation module 312 validate the recommendations before implementing them in the gas turbine system 102a.

FIG. 3B, with reference to FIGS. 1 and 2, illustrates a schematic block diagram representation 350 of the prediction module 308a associated with the system 200 of FIG. 2 or the GTPOS of FIG. 1 for accurately predicting and optimizing performance of gas turbines, such as the gas turbine system 102a, in accordance with an embodiment of the present disclosure. In an embodiment, the prediction module 308a includes a compressor module 352, a combustor module 354, a turbine module 356, and a steady state performance estimation module 358.

The compressor module 352 is configured to estimate the performance of the compressor present in the gas turbine system 102a. It should be noted that there are three widely used methods using which the performance of the compressor can be estimated viz. a stage stacking method in which performance estimation is done stage-wise and then performance of all stages are stacked together to get the overall performance of the compressor, a map extension method where a map is extended by performing extrapolation/interpolation of available compressor performance maps, and a map expression method that uses one or more fitting methods for estimating the compressor performance.

In an embodiment, the compressor module 352 uses the stage stacking method for estimating the performance of the compressor present in the gas turbine system 102a based on the compressor associated input data generated by the real-time monitoring and optimization module 308 and the one or more component models associated with the compressor that are stored in the model database 112. In general, the performance of the compressor is estimated for each of a steady state and a transient state. In one embodiment, the steady state performance estimation module 358 is configured to estimate steady state performance of the compressor, the combustor, and the turbine component.

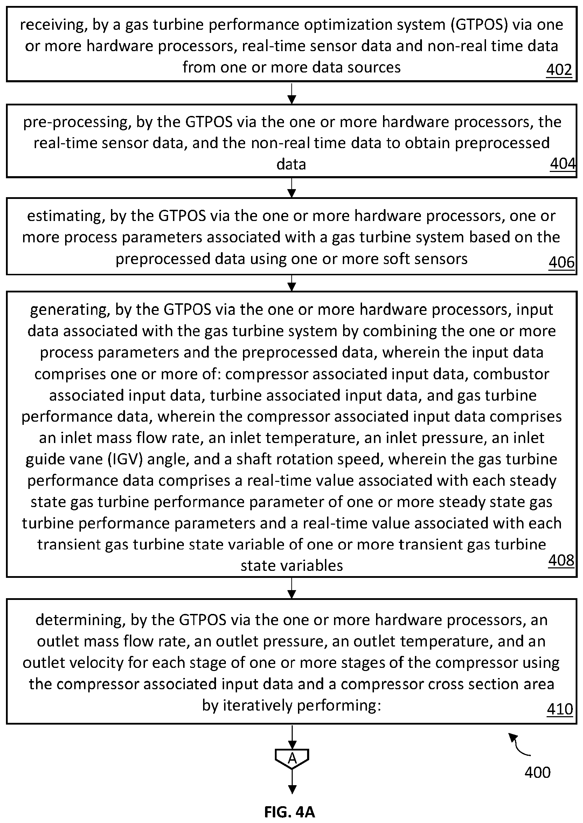

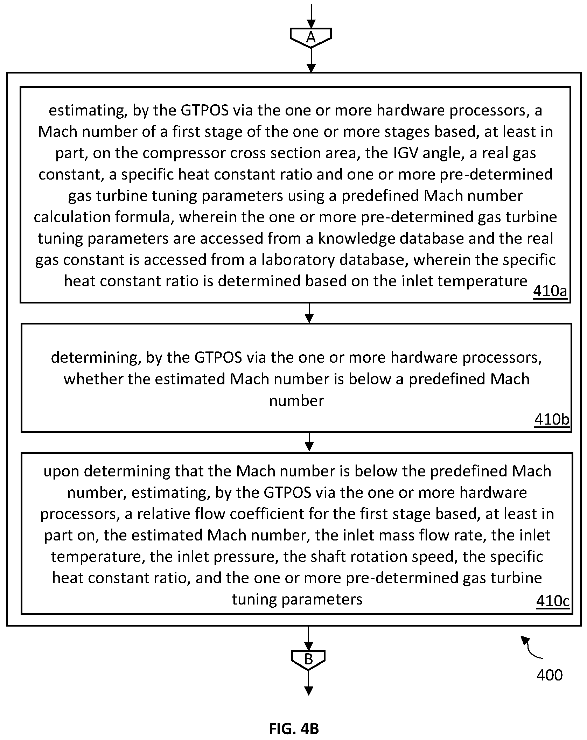

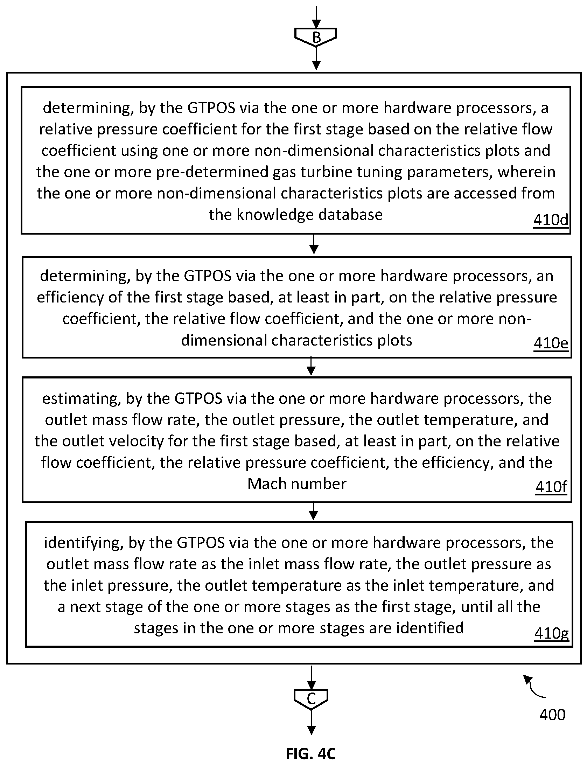

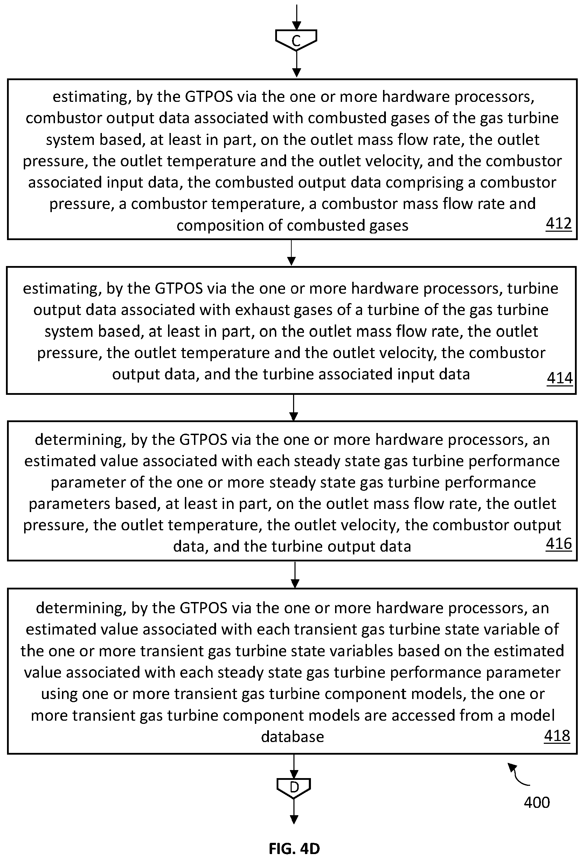

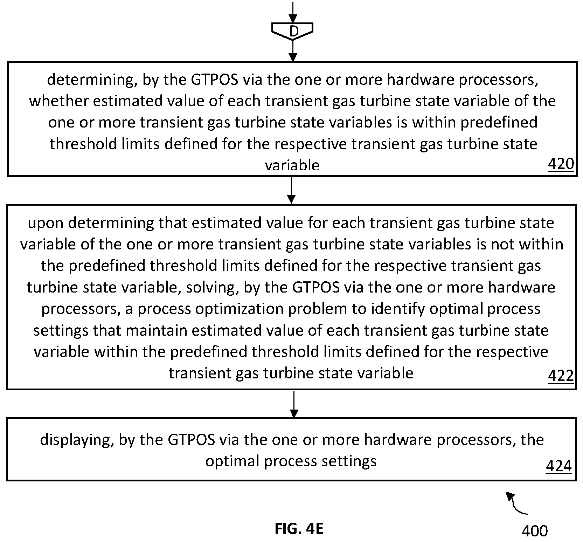

The steady state performance estimation module 358 is configured to receive compressor associated input data from the compressor module 352. The compressor associated input data includes an inlet mass flow rate, an inlet temperature, an inlet pressure, an inlet guide vane (IGV) angle, and a shaft rotational speed. The compressor module 352 also provides compressor cross section area information to the steady state performance estimation unit 358. Upon receiving compressor inlet information, the steady state performance estimation unit 358 is configured to estimate an outlet mass flow rate, an outlet pressure, an outlet temperature, and an outlet velocity for each stage of one or more stages of the compressor using the compressor associated input data and the compressor cross section area. It should be noted that the calculated outlet conditions i.e., the outlet mass flow rate, the outlet pressure, outlet temperature and outlet velocity determined for first stage will be used as an input for the next stage and the process is repeated until outlet conditions of the last stage of the compressor are determined. In one embodiment, the steady state performance estimation unit 358 is also configured to check whether the compressor is in a choking condition after estimating outlet condition for each stage of the one or more stages of the compressor. In case the compressor is found to be in the choking condition, the steady state performance estimation unit 358 is configured to change the mass flow rate or IGV angle to overcome the choking condition. The process of calculating outlet conditions is explained in detail with reference to FIG.4.

EP 4 223 982 B1

Once the outlet conditions of the compressor are determined, the steady state performance estimation module 358 is configured to calculate force (F) and work (W) based on the compressor associated input data and the outlet conditions using one or more steady state conservation equations. It should be noted that the one or more steady state conservation equations basically validates one or more pre-established steady state conservation laws that are generally expressed in form of the one or more conservation equations defined below:

Continuity Equation:

$$\dot{m}_{in} = \dot{m}_{out}$$

Momentum equation:

$$F = (\dot{m}u)_{out,ss} - (\dot{m}u)_{in} + (PA)_{out,ss} - (PA)_{in}$$

Energy balance equation:

$$W = (\dot{m}H)_{in} - (\dot{m}H)_{out,ss}, \quad \dot{Q} = \dot{m}_{in} * LHV$$

Where, $\dot{m}$ represents mass flow rate,

$F$ represents force,
$A$ represents compressor cross section area,
$P$ represents outlet pressure,
$H$ represents specific enthalpy,
$u$ represents normal component of velocity to compressor cross section area $A$,
$W$ represents work;
$LHV$ represents lower heating value;
$\dot{Q}$ represents heat or energy input;
Subscripts: $in$ represents inlet,
$out$ represent outlet, and
$ss$ represents steady state

The calculated force (**F**) and work (**W**) are transferred to the compressor module 352. It should be noted that the working of the steady state performance estimation module 358 is explained with reference to the compressor component only but the steady state performance estimation module 358 may also calculate force (**F**) and work (**W**) for the other components of the gas turbine system 102a, such as combustor and turbine component.

Thereafter, the compressor module 352 is configured to solve the one or more transient gas turbine component models to obtain transient state pressures, temperatures, mass flow rates and velocities using the determined steady state outlet conditions and the compressor associated input data. The one or more transient gas turbine component models can be physics-based models solving the below mentioned one or more conservation equations or can be data-driven models developed using historical operating data of the gas turbine system 102a. The one or more conservation equations are defined below:

1) Continuity Equation:

$$V\frac{d\rho}{dt} = \dot{m}_{in} - \dot{m}_{out}$$

2) Momentum equation:

$$V\frac{d(\rho u)}{dt} = (\dot{m}u)_{in} - (\dot{m}u)_{out} + (PA)_{in} - (PA)_{out} + F$$

3) Energy balance equation:

$$(C_p - \frac{R}{MW})\frac{\mathrm{d}(\rho T)}{\mathrm{d}t} = (\dot{m}H)_{in} - (\dot{m}H)_{out} + \dot{Q} + W$$

Where $V$ represents volume,

$R$ represents real gas constant,
$MW$ represents molecular weight,
$\rho$ represents density,
$t$ represents time,
$C_P$ represents specific heat constant at constant pressure, and
$T$ represents temperature.

In an embodiment, the combustor module 354 is configured to estimate combustor output data associated with combusted gases of the gas turbine system 102a based on the steady state outlet conditions of the last stage of the compressor, the combustor associated input data generated by the real-time monitoring and optimization module 308 and the one or more component models associated with the combustor that are stored in the model database 112. The combusted output data includes a combustor pressure, a combustor temperature, a combustor mass flow rate, and composition of combusted gases. It should be noted that the combustor output data can be estimated using any technique known in the art. Once the combustor output data is estimated, the combustor module 354 is configured to calculate heat or energy ($Q$) and force ($F$) generated by the combustor component based on the combustor associated input data and the compressor output data using one or more steady state conservation equations. Thereafter, the combustor module 354 uses the heat or energy ($Q$) and force ($F$) to solve transient gas turbine component models to estimate transient performance of the combustor.

The turbine module 356 is configured to estimate turbine output data associated with exhaust gases of the turbine of the gas turbine system 102a based on the steady state outlet conditions of the last stage of the compressor, the combustor output data, the turbine associated input data and the one or more component models associated with the turbine that are stored in the model database 112. It should be noted that the turbine output data can be estimated using any technique known in the art. In an embodiment, a stage stacking method similar to the compressor module 352 is adopted. In the stage stacking method followed by the turbine module 356, for each stage, a three-step approach including a stator cooling estimation, an expansion of gas in the turbine using Stodola's Ellipse and a rotor cooling estimation is adopted. The three-step approach is applied to each stage of the turbine and the performance is stacked to estimate the turbine output data. Once the turbine output data is estimated, the turbine module 356 is configured to calculate force ($F$) and work ($W$) by the turbine component based on the turbine associated input data and the turbine output data using the one or more steady state conservation equations. Thereafter, the turbine module 356 uses the calculated force ($F$) and work ($W$) to solve the transient gas turbine component models to estimate transient performance of the turbine component of the gas turbine system 102a.

In an embodiment, once the outlet conditions are estimated for each component i.e., the compressor, the combustor, and the turbine component of the gas turbine system 102a, the prediction module 308a may get the values of the one or more key parameters, such as compressor outlet pressure and outlet temperature, cooling flow rates, turbine intermediate stage temperatures, exhaust gas compositions etc., that were not available initially, thus increasing the visibility. Thereafter, the prediction module 308a may use the measured values of the one or more key parameters to determine steady state performance and the transient state performance of the gas turbine system 102a that can be used for monitoring and optimization purpose, thereby increasing the reliability.

FIGS. 4A, 4B, 4C, 4D and 4E, with reference to FIGS. 1, 2 and 3A-3B, collectively, illustrate an exemplary flow diagram 400 of a method for accurately predicting and optimizing performance of gas turbines, such as the gas turbine system 102a using the system 200 of FIG. 2 or the GTPOS 106 of FIG. 1, in accordance with an embodiment of the present disclosure. In an embodiment, the system(s) 200 comprises one or more data storage devices or the memory 208 operatively coupled to the one or more hardware processors 206 and is configured to store instructions for execution of steps of the method by the one or more hardware processors 206. The steps of the method of the present disclosure will now be explained with reference to the components of the system 200 as depicted in FIG. 2, and the GTPOS 106 of FIG. 1.

In an embodiment of the present disclosure, at step 402, the one or more hardware processors 206 of the gas turbine performance optimization system (GTPOS) 200 receive real-time sensor data and non-real time data from one or more data sources present in the gas turbine plant 102. The real-time sensor data and the non-real time data is associated with components of the gas turbine system 102a in the gas turbine plant 102.

At step 404 of the present disclosure, the one or more hardware processors 206 of the GTPOS 200 pre-process the real-time sensor data, and the non-real time data to obtain preprocessed data. As discussed previously, the hardware processors 206 process the received real-time sensor data and the non-real time data by performing one or more of outlier removal, imputation of missing data, unification of sampling frequency, introduction of appropriate lags, data synchronization and the like.

In an embodiment of the present disclosure, at step 406, the one or more hardware processors 206 of the GTPOS 200 estimate one or more process parameters associated with the gas turbine system 102a based on the preprocessed data using one or more soft sensors. In an embodiment, the one or more soft sensors are physics-based models, physics-based formulae and expressions, and data-driven models that are used to estimate process parameters, such as efficiency, Reynolds numbers, etc., that cannot be measured directly through instruments or physical sensors.

At step 408 of the present disclosure, the one or more hardware processors 206 of the GTPOS 200 generate input data associated with the gas turbine system 102a by combining the one or more process parameters and the preprocessed data. In particular, the hardware processors 206 integrate the received data and the one or more process parameters to generate the input data that will be used for estimating performance of the gas turbine system 102a. The input data includes one or more of compressor associated input data i.e., data that will be used as an input for computing performance of the compressor, combustor associated input data i.e., data that is used as an input for computing performance of the combustor, turbine associated input data i.e., data that will be used as an input for computing performance of the turbine, and gas turbine performance data i.e., the actual performance data of the gas turbine system 102a. The compressor associated input data includes the inlet mass flow rate, the inlet temperature, the inlet pressure, the IGV angle, and the shaft rotational speed. The gas turbine performance data includes a real-time value associated with each steady state gas turbine performance parameter of one or more steady state gas turbine performance parameters and a real-time value associated with each transient gas turbine state variable of one or more transient gas turbine state variables. Examples of the one or more steady state gas turbine performance parameters include, but are not limited to, generated power, generated thrust, and output heat. Examples of the one or more transient gas turbine state variables include, but are not limited to, compressor outlet pressure, combusted gas temperature, exhaust mass flow rate, exhaust gas temperature, exhaust gas composition, rotational speed of the gas turbine, generated power, generated thrust, and output heat.

In an embodiment of the present disclosure, at step 410, the one or more hardware processors 206 of the GTPOS 200 determine an outlet mass flow rate, an outlet pressure, an outlet temperature, and an outlet velocity for each stage of one or more stages of the compressor using the compressor associated input data and a compressor cross section area by iteratively performing a plurality of steps i.e., step 410a to step 410g until all the stages in the one or more stages are identified.

More specifically, at step 410a of the present disclosure, the one or more hardware processors 206 of the GTPOS 200 estimate a Mach number of a first stage of the one or more stages of the compressor based, at least in part, on the compressor cross section area, the IGV angle, a real gas constant, a specific heat constant ratio and one or more predetermined gas turbine tuning parameters using a predefined Mach number calculation formula. The one or more predetermined gas turbine tuning parameters are accessed from the knowledge database 108 and the real gas constant is accessed from the laboratory database present in the plant data sources 102c. The step 410a is better understood by way of the following description.

For computing the Mach number, the hardware processors 206 first determine the specific heat constant ratio based on the inlet temperature. The relations to calculate specific heat constant at constant pressure at a given temperature are available in the knowledge database 108. The specific heat constant ratio is calculated by using a formula mentioned below:

$$\gamma = \frac{C_P}{C_P - R}$$

Where, $C_P$ represent specific heat constant at constant pressure;

$R$ represents real gas constant, and
$\gamma$ represents specific heat constant ratio

Once the specific heat constant ratio is available, the hardware processors 206 of the GTPOS 200 estimate the Mach number using the predefined Mach number calculation formula represented by:

$$M\left(1 + \frac{\gamma-1}{2}M^2\right)^{\frac{-(\gamma+1)}{2(\gamma-1)}} = \frac{\dot{m}\sqrt{T_t}}{P_t A \cos\alpha}\sqrt{\frac{R}{\gamma}},$$

Where, M represents Mach number,

$\gamma$ represents specific heat constant ratio,

**R** represents real gas constant,

**A** represents compressor cross section area, $\dot{m}$ represents inlet mass flow rate,

$\alpha$ represents IGV angle, $T_t$ represents inlet temperature and $P_t$ represents inlet pressure.

As can be seen in the predefined Mach number calculation formula, values of the parameters present on a Right Hand Side (RHS) of the formula are known. The only unknown is the Mach number M present on the Left Hand Side (LHS) of the Mach number calculation formula. The hardware processors 206 solve the formula to determine the value of M.

At step 410b of the present disclosure, the one or more hardware processors 206 of the GTPOS 200 determine whether the estimated Mach number is below a predefined Mach number. In an embodiment, the predefined Mach number can be '1'. So, the hardware processors 206 check whether the estimated Mach number is below or equivalent to one. In case the Mach number is found below the predefined Mach number i.e., one, step 410c is performed. Otherwise, one or more hardware processors 206 identify the compressor associated input data as a choke point for the current stage. The choke point of the current stage i.e., the first stage and a choking notification is displayed to the operator of the gas turbine system 102a. In an embodiment, the choking notification includes a message to modify at least one of the inlet mass flow rate, and the inlet IGV angle so that choking of the compressor in the first stage is avoided as the current inlet mass flow rate and the IGV angle are leading to choking of the compressor.

At step 410c of the present disclosure, the one or more hardware processors 206 of the GTPOS 200 estimate a relative flow coefficient for the first stage based, at least in part on, the estimated Mach number, the inlet mass flow rate, the inlet temperature, the inlet pressure, the shaft rotational speed, the specific heat constant ratio, and the one or more pre-determined gas turbine tuning parameters upon determining that the Mach number is below the predefined Mach number. In an embodiment, the one or more hardware processors 206 may use a relative flow coefficient calculation formula for calculating the formula relative flow coefficient. The relative flow coefficient calculation formula represented by:

$$\phi^* = \frac{\left(\frac{\dot{m}T_t}{P_tN}\right)}{\left(\frac{\dot{m}T_t}{P_tN}\right)_{ref}} \frac{\left(1+\frac{\gamma-1}{2}M^2\right)^{\frac{1}{\gamma-1}}}{\left(1+\frac{\gamma-1}{2}M_{ref}^2\right)^{\frac{1}{\gamma-1}}},$$

Where $\phi^*$ represents the relative flow coefficient, N represents the rotation speed.

It should be noted that subscript *'ref'* in the above-mentioned formula refers to the reference conditions that are assumed to be known by the hardware processors 206. The reference conditions include reference mass flow rates **($\dot{m}$)**, reference total pressures **($P_{t.ref}$)**, reference total temperatures **($T_{t.ref}$)**, reference Mach numbers **($M_{ref}$)**, reference cross section area **(A)**, properties, such as reference real gas constant **(R)**, reference specific heat constant at constant pressure **($C_P$)**, reference specific heat constant ratio **($\gamma$)**, reference coolant flow rates **($m_{cl}$)**, reference efficiencies **($\eta_{ref}$)**, at all the locations i.e., at inlet and outlet of each stage of the compressor. In an embodiment, the hardware processors 206 estimate these reference conditions using design point specifications provided by the Original Equipment Manufacturers (OEMs).

At step 410d of the present disclosure, the one or more hardware processors 206 of the GTPOS 200 determine a relative pressure coefficient for the current stage i.e., the first stage based on the relative flow coefficient using one or more non-dimensional characteristics plots and the one or more pre-determined gas turbine tuning parameters. In one embodiment, the hardware processors 206 may access the one or more non-dimensional characteristics plots from the knowledge database 108. The calculation of the relative pressure coefficient is better understood by way of the following description.

The relative pressure coefficient $\psi^*$ at current stage is determined based on the calculated relative flow coefficient using:

$$\psi^* = P(\phi^*)$$

Where, P is a function that relates the relative flow coefficient and relative pressure coefficient.

Once the relative flow coefficient is determined, the hardware processors 206 determine relative efficiency $\eta^*$ based on the calculated relative pressure coefficient and the relative flow coefficient using:

$$\eta^* = Q\left(\psi^*/\phi^*\right)$$

Where, **Q** represents a function that relates the relative efficiency, relative pressure coefficient and the relative flow coefficient.

At step 410e of the present disclosure, the one or more hardware processors 206 of the GTPOS 200 determine an efficiency $\eta$ of the current stage i.e., first stage based, at least in part, on the relative pressure coefficient, the relative flow coefficient, and the one or more non-dimensional characteristics plots using:

$$\eta = \eta^* * \eta_{ref},$$

Where $\eta_{ref}$ represents the reference efficiency.

In an embodiment of the present disclosure, at step 410f, the one or more hardware processors 206 of the GTPOS 200 estimate the outlet mass flow rate, the outlet pressure, the outlet temperature, and the outlet velocity for the first stage based, at least in part, on the relative flow coefficient, the relative pressure coefficient, the efficiency, and the Mach number. The above step is better understood by way of following description.

In an embodiment, the hardware processors 206 first estimate the outlet pressure of the current stage i.e., the first stage based, at least in part, on the determined relative pressure coefficient, the specific heat constant at constant pressure, the inlet pressure, the inlet temperature, and the shaft rotational speed using a predefined pressure coefficient equation represented as:

$$\psi^* = \frac{\left(C_p T_{in.t}(PR^{\frac{\gamma-1}{\gamma}} -1)\right)}{W_{is,ref}} * \left(\frac{N_{ref}}{N}\right)^2,$$

Where, reference isentropic work done can be represented as:

$$W_{is,ref} = \left(C_p T_{in.t}(PR^{\frac{\gamma-1}{\gamma}} - 1)\right)_{ref},$$

Where, $T_{in.t}$ represents the inlet temperature at stage one and $C_p$ represents the specific heat constant at constant pressure.

s seen in the equations, the only unknown parameter is a pressure ratio PR. So, the hardware processors 206 compute a pressure ratio of the first stage based, at least in part, on the relative pressure coefficient, the specific heat constant at constant pressure, the inlet temperature and the shaft rotational speed by solving the predefined pressure coefficient equation. Once the pressure ratio is determined, the hardware processors 206 estimate the outlet pressure $P_{out,t}$ of the current stage i.e., the first stage using:

$$P_{out,t} = PR * P_{in,t}$$

Where, $PR$ is computed previously by the processor 206 and the inlet pressure $P_{in,t}$ is already known.

Once the outlet pressure at stage one is determined, the hardware processors 206 estimate the outlet temperature of the first stage based, at least in part, on the outlet pressure, the specific heat constant ratio, the specific heat constant- at constant pressure, the inlet temperature, and the inlet mass flow rate.

In one embodiment, for calculating the outlet temperature of the first stage, the hardware processors 206 first compute an isentropic temperature increase for the first stage based on the pressure ratio of the first stage, the specific heat constant ratio and the inlet temperature using:

$$\frac{T_{out,\,is}}{T_{in}} = \left(\frac{P_{out}}{P_{in}}\right)^{\frac{\gamma-1}{\gamma}}$$

As seen in the above-mentioned equation, the only unknown is the isentropic temperature increase $T_{out,is}$. So, the hardware processors 206 solve the above-mentioned equation to get the $T_{out,\,is}$. Thereafter, the hardware processors 206 calculate an isentropic specific enthalpy increase $\Delta h_{is}$ across the first stage based on the isentropic temperature increase and the specific heat constant using a predefined isentropic specific enthalpy increase formula represented by:

$$\Delta h_{is} = \int_{T_o}^{T_{out,ss}} C_p dT,$$

Where $T_o$ = 298.15 K.

Further, the hardware processors 206 calculate an actual specific enthalpy increase $\Delta h_{act}$ based on the isentropic specific enthalpy increase and the efficiency using:

$$\Delta h_{act} = \frac{\Delta h_{is}}{\eta}$$

Once the actual specific enthalpy increase is determined, the hardware processors 206 determine the outlet temperature for which the specific enthalpy increase is equivalent to the actual specific enthalpy increase i.e.,

$$\Delta h_{act} = \int_{T_o}^{T_{out}} C_p dT.$$

In an embodiment, for determining the outlet temperature, the hardware processors 206 assume some outlet temperature $T_{out}$ and determine the specific enthalpy change across the first stage. Thereafter, the hardware processors 206 compare the determined specific enthalpy change with the actual specific enthalpy increase calculated previously to determine an error between them. If the error is more than a predefined tolerance, the hardware processors 206 change the assumed outlet temperature till the error falls within the predefined tolerance. The assumed outlet temperature for which the error is within the predefined tolerance is considered as the outlet temperature of the first stage.

After the estimation of the outlet temperature of the current stage, the hardware processors 206 estimate the outlet mass flow rate of the first stage based on the outlet temperature, the outlet pressure and the inlet mass flow rate $\dot{m}_{in}$. For estimating the outlet mass flow rate, the coolant mass flow rate that is used for cooling purpose needs to be extracted from the actual mass flow rate. So, the hardware processors 206 first estimate mass flow rate of coolant extracted at current stage using:

$$\dot{m}_{cl} = \dot{m}_{cl,ref} \left( \frac{P_{out,t}}{P_{out,t.ref}} \right) \sqrt{\frac{T_{out.ref}}{T_{out}}},$$

Where $\dot{m}_{cl}$ represents mass flow rate of coolant extracted at current stage,

$P_{out,t}$ represents outlet pressure calculated previously; and
$T_{out}$ represents outlet temperature calculated previously.

As the reference conditions are assumed to be known initially, the mass flow rate of coolant extracted is calculated using the above-mentioned equation. Once the mass flow rate of coolant is calculated, the outlet mass flow rate $m_{out}$ of the first stage is calculated using:

$$\dot{m}_{out} = \dot{m}_{in} - \dot{m}_{cl}$$

Further, the hardware processors 206 calculate the outlet velocity for the first stage using below-mentioned equations:

$$C = M * \sqrt{\gamma RT},$$

$$T = T_{out} \left( 1 + \frac{\gamma-1}{2} M^2 \right)^{-1},$$

$$C_x = C * \cos(\alpha) = u,$$

$$C_y = C * \sin(\alpha) = v$$

Where $T_{out}$ represents calculated outlet temperature,

$R$ represents real gas constant,
$\gamma$ represents specific heat ratio,

*M* represents Mach Number, and

$\alpha$ represents absolute velocity angle.

In an embodiment, once the outlet conditions of the compressor for the received compressor associated input data is determined, the one or more hardware processors 206 further receive one or more new sets of compressor associated input data. In one embodiment, the one or more new sets of compressor associated input data are generated by making some changes in the inlet as well as assumed reference conditions. Once the one or more new sets of compressor associated input data is available, the hardware processors 206 estimate compressor outlet pressure for each new sets of compressor associated input data of the one or more new sets of compressor associated input data using the same process as defined above. Thereafter, hardware processors 206 create a compressor performance map based on the compressor outlet pressure estimated for each new set of compressor associated input data of the one or more new sets of compressor associated input data. The created compressor performance map includes one or more contours and each contour present in the performance map is associated with each new set of compressor associated input data that has same non-dimensional rotational speed. In an embodiment, the non-dimensional rotational speed is obtained by dividing new shaft rotational speed by square root of new inlet temperature present in the respective new set of compressor associated input data.

Once the compressor performance map is created, the hardware processors 206 identify an inflection point for each contour of the one or more contours in the compressor performance map. In an embodiment, the inflection point is the point on a curve where the curve changes from sloping up or down to sloping down or up of the contour. The inflection point is an indication of the surge point for the respective contour. Thereafter, the hardware processors 206 display a surge point to the operator of the gas turbine system 102a for each new compressor associated input data based on the inflection point identified for the corresponding new compressor associated input data. The prior knowledge of the surge points may help the operator in managing the gas turbine system 102a better as the operator can avoid the surge points while selecting settings for the gas turbine system 102a.

In an embodiment of the present disclosure, at step 410g, the one or more hardware processors 206 of the GTPOS 200 identify the outlet mass flow rate as the inlet mass flow rate, the outlet pressure as the inlet pressure, the outlet temperature as the inlet temperature, and a next stage of the one or more stages as the first stage until all the stages in the one or more stages are identified. Basically, at this step, the hardware processors 206 identify the outlet conditions determined for the first stage of the compressor as the input conditions for the next stage. And this process is repeated until the outlet conditions for the last stage of the compressor are determined.

In an embodiment of the present disclosure, at step 412, the one or more hardware processors 206 of the GTPOS 200 estimate combustor output data associated with combusted gases of the gas turbine system 102a based, at least in part, on the outlet mass flow rate, the outlet pressure, the outlet temperature and the outlet velocity, and the combustor associated input data. The outlet conditions of the compressor determined above is now used by the hardware processors 206 along with the combustor associated input data to estimate the combustor output data. It should be noted that the hardware processors 206 may use any technique known in the art for estimating the combustor output data. In one embodiment, a physics based model can be used in which the combustor output data is estimated by solving the steady state and transient state conservation equations. In the physics based model composition based analysis is used to estimate the composition of combusted gases. The combusted output data includes a combustor pressure, a combustor temperature, a combustor mass flow rate, and composition of combusted gases.

In an embodiment of the present disclosure, at step 414, the one or more hardware processors 206 of the GTPOS 200 estimate turbine output data associated with exhaust gases of the turbine of the gas turbine system 102a based, at least in part, on the outlet mass flow rate, the outlet pressure, the outlet temperature and the outlet velocity, the combustor output data, and the turbine associated input data. After the estimation of the outlet conditions of the compressor and the combusted output data, the hardware processors 206 use them along with the turbine associated input data to estimate the turbine output data. It should be noted that the hardware processors 206 may use any technique known in the art for estimating the turbine output data.

At step 416 of the present disclosure, the one or more hardware processors 206 of the GTPOS 200 determine an estimated value associated with each steady state gas turbine performance parameter of the one or more steady state gas turbine performance parameters based, at least in part, on the outlet mass flow rate, the outlet pressure, the outlet temperature, the outlet velocity, the combustor output data, and the turbine output data. In particular, outlet parameter values determined for each component of the gas turbine system 102a are used by the hardware processors 206 to compute estimated value associated with the one or more steady state gas turbine performance parameters. Examples of the one or more steady state gas turbine performance parameters include, but are not limited to, power, output, thrust, etc., generated by the gas turbine system 102a. It should be noted that the one or more steady state gas turbine performance parameters may vary depending on the type of end requirement for which the gas turbine system 102a is designed.

In an embodiment, once the estimated value associated with each steady state gas turbine performance parameter of the one or more steady state gas turbine performance parameters is determined, the one or more hardware processors 206 compute the prediction performance quality index by comparing estimated values of the one or more steady state gas turbine process parameters with the real-time values of the one or more steady state gas turbine process parameters. Thereafter, the one or more hardware processors 206 determine whether the computed predictive performance quality index is below a pre-defined predictive performance quality index threshold. Basically, the hardware processors 206 compare the computed prediction performance quality index with the pre-defined predictive performance quality index threshold. If the computed prediction performance quality index is found within the pre-defined predictive performance quality index threshold, step 418 is performed. Upon determining that the computed prediction performance quality index is below the pre-defined predictive performance quality index threshold, the hardware processors 206 initiate design point calibration for tuning one or more pre-determined gas turbine tuning parameters such that the computed predictive performance quality index remain above the pre-defined predictive performance quality index threshold. It should be noted that the pre-defined predictive performance quality index threshold depends on the error metric in consideration. For example, if the considered error metric is MAPE, then the pre-defined predictive performance quality index threshold can be between 1% to 5%. So, if MAPE between the estimated exhaust mass flow rate and the real time mass flow rate is not in the range of 1% to 5%, the hardware processors 206 trigger the design point calibration. The design point calibration process is explained in detail with reference to FIG. 5. Once the gas turbine tuning parameters, such as shape factor, Mach inlet and tangential velocity are tuned, the hardware processors 206 store the one or more tuned pre-determined gas turbine tuning parameters in the knowledge database 108 and perform the step 418.

At step 418 of the present disclosure, the one or more hardware processors 206 of the GTPOS 200 determine an estimated value associated with each transient gas turbine state variable of the one or more transient gas turbine state variables based on the estimated value associated with each steady state gas turbine performance parameter using one or more transient gas turbine component models. In particular, the estimated values associated with the one or more steady state gas turbine performance parameters are used by the hardware processors 206 to determine estimated values associated with the one or more transient gas turbine state variables using the one or more transient gas turbine component models that are accessed from the model database 112. The one or more transient gas turbine component models include one of one or more physics-based models, and one or more data-driven models. Examples of the one or more transient gas turbine state variables include, but are not limited to, a compressor outlet pressure, a combusted gas temperature, an exhaust mass flow rate, an exhaust gas temperature, an exhaust gas composition, a rotational speed of gas turbine, a Mach number, a generated power, a generated thrust, and an output heat.

In an embodiment, once the estimated value associated with each transient gas turbine state variable of the one or more transient gas turbine state variable is determined, the hardware processors 206 compute a model quality index by comparing estimated values of the one or more transient gas turbine state variables with the real-time values of the one or more transient gas turbine state variables. Thereafter, the one or more hardware processors 204 determines whether the computed model quality index is below the pre-defined model quality index threshold. Basically, the hardware processors 206 compare the computed model quality index with the pre-defined model quality index threshold. If the computed model quality index is found within the pre-defined model quality index threshold, step 420 is performed. Otherwise, upon determining that the computed model quality index is below the pre-defined model quality index threshold, the hardware processors 206 initiate self-learning of one or more transient gas turbine component models. It should be noted that the pre-defined model quality index threshold depends on the error metric in consideration. In self-learning, either model parameters and hyper parameters of the one or more transient gas turbine component models are tuned, or machine learning technique used in the one or more transient gas turbine component models is changed, or variables used in the transient gas turbine component models are changed such that the model quality index is maintained above the pre-defined model quality index threshold. Examples of the model parameters include reference efficiencies, Stodola's constant, pressure losses, combustion kinetics reaction rates, heat transfer coefficient etc. In an embodiment, hyper parameters of physics based models include maximum iterations of numerical schemes, convergence tolerance, etc., and hyper parameters of data driven models include number of features, number of hidden layers, number of neurons, learning rate, learning algorithm etc. Once the self-leaning is completed, the hardware processors 206 perform the step 420.

At step 420 of the present disclosure, the one or more hardware processors 206 of the GTPOS 200 determine whether estimated value of each transient gas turbine state variable of the one or more transient gas turbine state variables is within predefined threshold limits defined for the respective transient gas turbine state variable and whether the key performance indicator (KPIs) such as thermal efficiency, generated power, pollutants such as $CO_2$ and nitrogen oxides in exhaust gas, etc. are in the specified ranges. In particular, the hardware processors 206 check whether estimated value of each transient gas turbine state variable is as per the threshold limits predefined for the respective variable and whether the KPIs are in desired ranges. If the estimated value of each transient gas turbine state variable and the KPIs are found to be within the predefined threshold limits, the hardware processors 206 identifies the estimated value of each transient gas turbine state variable of the one or more transient gas turbine state variables as an optimal process setting. In particular, the hardware processors 206 consider that the gas turbine system 102a is operating at an optimized operating point and there is no need to change any input parameter as the current settings are the best possible settings for the gas turbine system 102a. In case it is determined that the estimated value for each transient gas turbine state variable of the one or more transient gas turbine state variables and the KPIs are not within the predefined threshold limits defined for the respective transient gas turbine state variable, step 422 is performed by the hardware processors 206.

At step 422 of the present disclosure, the one or more hardware processors 206 of the GTPOS 200 solve a process optimization problem to identify optimal process settings that optimizes the KPIs and maintains estimated value of each transient gas turbine state variable within the predefined threshold limits defined for the respective transient gas turbine state variable upon determining that estimated value for each transient gas turbine state variable of the one or more transient gas turbine state variables and the KPIs are not within the predefined threshold limits defined for the respective transient gas turbine state variable. As discussed previously, the process optimization problem to be solved changes depending on the requirement and real-time demand from the end use of the gas turbine outputs. So, one or more objectives for the process optimization problem can be to reduce specific fuel consumption, reduced cost of operation, increased efficiency, reduced emissions and one or more constraints including physical and safe limits of operation including surge points, choke points, upper limit of turbine inlet temperature, air to fuel ratio limits and emission norms, generated power, frequency of generated power and the transient state variable thresholds. In particular, the one or more hardware processors 206 may learn new values of set points for the component variables by solving the process optimization problem so that the KPIs are optimized, and the estimated value of each transient gas turbine state variable comes within the predefined threshold limits defined for the respective transient gas turbine state variable. The changes that are done in the component variables that bring the values of the transient gas turbine state variables within the predefined thresholds are considered as the optimal process settings by the hardware processors 206. The optimal process settings are then displayed (at step 424) by the hardware processors 206 to the user/controller of the gas turbine system 102a and may be sent to the gas turbine plant 102 for implementation.

FIG. 5, with reference to FIGS. 1 through 4E, illustrates a schematic block diagram representation 500 of a design point calibration process followed for calibrating a steady state performance model of the compressor, in accordance with an embodiment of the present disclosure.

The block diagram representation 500 includes the prediction module 308a, and the design point calibration module 310. As discussed previously, the prediction module 308a computes the prediction performance quality index by comparing estimated values of the one or more steady state gas turbine process parameters with the real-time values of the one or more steady state gas turbine process parameters. In case the computed prediction performance quality index is found below the pre-defined predictive performance quality index threshold, the prediction module 308a sends one or more signals to the design point calibration module 310 to initiate the design point calibration process. Once the design point calibration module 310 receives the one or more signals, the design point calibration module 310 initiates the design point calibration process that is explained using steps 502 to 508.

In one embodiment, at step 502, the hardware processors 206 first initialize the one or more tuning parameters, such as shape factor, Mach number at inlet and tangential velocity.

At step 504, the hardware processors 206 estimate the relative flow coefficient for the compressor associated input data. The process of estimating relative flow coefficient is explained in detail with reference to FIGS. 4A through 4E and the process is not reiterated herein for the sake of brevity. Once the relative flow coefficient is available, the hardware processors 206 estimate outlet conditions, such as outlet pressures, outlet temperatures, and outlet mass flow rates (step 506) for each stage of the compressor and for different input conditions. It should be noted that the different input conditions are accessed from the historical data present in the knowledge database 108. Once the performance of the compressor at different operating points is available, the hardware processors 206 compute one or more error metrics such as a mean absolute error (MAE), a root mean square error (RMSE) and a mean absolute percentage error (MAPE) between the calculated outlet conditions and the actual outlet conditions. If the error metrics are found to be less than a predefined tolerance (508), the design point calibration is considered as completed. Otherwise, the hardware processors 206 may change the initialized one or more tuning parameters and the steps 504 to 508 are repeated until the steady state performance model of the compressor is calibrated.

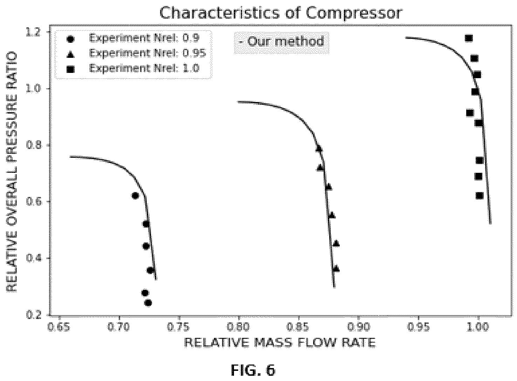

FIG 6 is a graphical representation illustrating comparison of estimated compressor performance with experimental data available in the prior art, in accordance with an embodiment of the present disclosure.

As seen in the FIG. 6, the estimated performance using the method 400 is accurately predicted the experimental data that is available in the art.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. **Also, the words "comprising," "having," "containing," and "including," and other** similar forms are intended to be equivalent in meaning and be open ended in that an item or items following any one of these words is not meant to be an exhaustive listing of such item or items, or meant to be limited to only the listed item or items. It must **also be noted that as used herein and in the appended claims, the singular forms "a," "an," and "the" include plural references unless the context clearly dictates otherwise.**

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent **with the embodiments described herein. The term "computer-readable medium" should** be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

   receiving, by a gas turbine performance optimization system (GTPOS) via one or more hardware processors, real-time sensor data and non-real time data from one or more data sources (402);
   pre-processing, by the GTPOS via the one or more hardware processors, the real-time sensor data, and the non-real time data to obtain preprocessed data (404);
   estimating, by the GTPOS via the one or more hardware processors, one or more process parameters associated with a gas turbine system based on the preprocessed data using one or more soft sensors (406);
   generating, by the GTPOS via the one or more hardware processors, input data associated with the gas turbine system by combining the one or more process parameters and the preprocessed data, wherein the input data comprises one or more of: compressor associated input data, combustor associated input data, turbine associated input data, and gas turbine performance data, wherein the compressor associated input data comprises an inlet mass flow rate, an inlet temperature, an inlet pressure, an inlet guide vane (IGV) angle, and a shaft rotational speed, and wherein the gas turbine performance data comprises a real-time value associated with each steady state gas turbine performance parameter of one or more steady state gas turbine performance parameters and a real-time value associated with each transient gas turbine state variable of one or more transient gas turbine state variables (408);
   determining, by the GTPOS via the one or more hardware processors, an outlet mass flow rate, an outlet pressure, an outlet temperature, and an outlet velocity for each stage of one or more stages of the compressor using the compressor associated input data and a compressor cross section area by iteratively performing (410):

estimating, by the GTPOS via the one or more hardware processors, a Mach number of a first stage of the one or more stages based, at least in part, on the compressor cross section area, the IGV angle, a real gas constant, a specific heat constant ratio and one or more pre-determined gas turbine tuning parameters using a predefined Mach number calculation formula, wherein the one or more pre-determined gas turbine tuning parameters are accessed from a knowledge database and the real gas constant is accessed from a laboratory database, and wherein the specific heat constant ratio is determined based on the inlet temperature (410a);

determining, by the GTPOS via the one or more hardware processors, whether the estimated Mach number is below a predefined Mach number (410b);

upon determining that the Mach number is below the predefined Mach number, estimating, by the GTPOS via the one or more hardware processors, a relative flow coefficient for the first stage based, at least in part on, the estimated Mach number, the inlet mass flow rate, the inlet temperature, the inlet pressure, the shaft rotational speed, the specific heat constant ratio, and the one or more pre-determined gas turbine tuning parameters (410c);

determining, by the GTPOS via the one or more hardware processors, a relative pressure coefficient for the first stage based on the relative flow coefficient using one or more non-dimensional characteristics plots and the one or more pre-determined gas turbine tuning parameters, wherein the one or more non-dimensional characteristics plots are accessed from the knowledge database (410d);

determining, by the GTPOS via the one or more hardware processors, an efficiency of the first stage based, at least in part, on the relative pressure coefficient, the relative flow coefficient, and the one or more non-dimensional characteristics plots (410e);

estimating, by the GTPOS via the one or more hardware processors, the outlet mass flow rate, the outlet pressure, the outlet temperature, and the outlet velocity for the first stage based, at least in part, on the relative flow coefficient, the relative pressure coefficient, the efficiency, and the Mach number (410f); and

identifying, by the GTPOS via the one or more hardware processors, the outlet mass flow rate as the inlet mass flow rate, the outlet pressure as the inlet pressure, the outlet temperature as the inlet temperature, and a next stage of the one or more stages as the first stage,

until all the stages in the one or more stages are identified (410g);

estimating, by the GTPOS via the one or more hardware processors, combustor output data associated with combusted gases of the gas turbine system based, at least in part, on the outlet mass flow rate, the outlet pressure, the outlet temperature and the outlet velocity, and the combustor associated input data, the combusted output data comprising a combustor pressure, a combustor temperature, a combustor mass flow rate and composition of combusted gases (412);

estimating, by the GTPOS via the one or more hardware processors, turbine output data associated with exhaust gases of a turbine of the gas turbine system based, at least in part, on the outlet mass flow rate, the outlet pressure, the outlet temperature and the outlet velocity, the combustor output data, and the turbine associated input data (414);

determining, by the GTPOS via the one or more hardware processors, an estimated value associated with each steady state gas turbine performance parameter of the one or more steady state gas turbine performance parameters based, at least in part, on the outlet mass flow rate, the outlet pressure, the outlet temperature, the outlet velocity, the combustor output data, and the turbine output data (416);

determining, by the GTPOS via the one or more hardware processors, an estimated value associated with each transient gas turbine state variable of the one or more transient gas turbine state variables based on the estimated value associated with each steady state gas turbine performance parameter using one or more transient gas turbine component models, and the one or more transient gas turbine component models are accessed from a model database, wherein the one or more transient gas turbine component models comprise one of: one or more physics-based models, and one or more data-driven models (418);

determining, by the GTPOS via the one or more hardware processors, whether estimated value of each transient gas turbine state variable of the one or more transient gas turbine state variables is within predefined threshold limits defined for the respective transient gas turbine state variable (420);

upon determining that estimated value for each transient gas turbine state variable of the one or more transient gas turbine state variables is not within the predefined threshold limits defined for the respective transient gas turbine state variable, solving, by the GTPOS via the one or more hardware processors, a process optimization problem to identify optimal process settings that maintain estimated value of each transient gas turbine state variable within the predefined threshold limits defined for the respective transient gas turbine state variable (422);

and

displaying, by the GTPOS via the one or more hardware processors, the optimal process settings (424).

2. The processor implemented method of claim 1, further comprising:

computing, by the GTPOS via the one or more hardware processors, a prediction performance quality index by comparing estimated values of the one or more steady state gas turbine process parameters with real-time values of the one or more steady state gas turbine process parameters;

determining, by the GTPOS via the one or more hardware processors, whether computed predictive performance quality index is below a pre-defined predictive performance quality index threshold;

upon determining that the computed predictive performance quality index is below the predefined predictive performance quality index threshold, initiating, by the GTPOS via the one or more hardware processors, design point calibration for tuning one or more pre-determined gas turbine tuning parameters such that the computed predictive performance quality index remain above the predefined predictive performance quality index threshold, wherein the one or more tuned pre-determined gas turbine tuning parameters are stored in the knowledge database.

3. The processor implemented method of claim 1, further comprising:

receiving, by the GTPOS via the one or more hardware processors, one or more new sets of compressor associated input data;

estimating, by the GTPOS via the one or more hardware processors, compressor outlet pressure for each new sets of compressor associated input data of the one or more new sets of compressor associated input data;

creating, by the GTPOS via the one or more hardware processors, a compressor performance map based on the compressor outlet pressure estimated for each new set of compressor associated input data of the one or more new sets of compressor associated input data, wherein the compressor performance map comprises one or more contours, wherein each contour is associated with each new set of compressor associated input data that has same non-dimensional rotational speed, and wherein the non-dimensional rotational speed is obtained by dividing new shaft rotational speed by square root of new inlet temperature present in the respective new set of compressor associated input data;

identifying, by the GTPOS via the one or more hardware processors, an inflection point for each contour of the one or more contours in the compressor performance map; and

displaying, by the GTPOS via the one or more hardware processors, a surge point for each new compressor associated input data based on the inflection point identified for the corresponding new compressor associated input data.

4. The processor implemented method of claim 1, further comprising:

upon determining that the Mach number is not below the predefined Mach number,

identifying, by the GTPOS via the one or more hardware processors, the compressor associated input data as a choke point for the first stage; and

displaying, by the GTPOS via the one or more hardware processors, the choke point of the first stage and a choking notification, the choking notification comprising a message to modify at least one of the inlet mass flow rate and the inlet IGV angle so that choking of the compressor in the first stage is avoided.

5. A gas turbine performance optimization system (GTPOS) (200), comprising:

a memory (208) storing instructions;

one or more communication interfaces (210); and

one or more hardware processors (206) coupled to the memory (208) via the one or more communication interfaces (210), wherein the one or more hardware processors (206) are configured by the instructions to:

receive real-time sensor data and non-real time data from one or more data sources;

pre-process the real-time sensor data and the non-real time data to obtain preprocessed data;

estimate one or more process parameters associated with a gas turbine system based on the preprocessed data using one or more soft sensors;

generate input data associated with the gas turbine system by combining the one or more process parameters and the preprocessed data, wherein the input data comprises one or more of: compressor associated input data, combustor associated input data, turbine associated input data, and gas turbine performance data, wherein the compressor associated input data comprises an inlet mass flow rate, an inlet temperature, an inlet pressure, an inlet guide vane (IGV) angle, and a shaft rotational speed, and wherein the gas turbine performance data comprises a real-time value associated with each steady state gas turbine performance parameter of one or more steady state gas turbine performance parameters and a real-time value associated with each transient gas turbine state variable of one or more transient gas turbine state variables;

determine an outlet mass flow rate, an outlet pressure, an outlet temperature, and an outlet velocity for each stage of one or more stages of the compressor using the compressor associated input data and a compressor cross section area by iteratively performing:

estimating a Mach number of a first stage of the one or more stages based, at least in part, on the compressor cross section area, the IGV angle, a real gas constant, a specific heat constant ratio and one or more pre-determined gas turbine tuning parameters using a predefined Mach number calculation formula, wherein the one or more pre-determined gas turbine tuning parameters are accessed from a knowledge database and the and the real gas constant is accessed from a laboratory database, and wherein the specific heat constant ratio is determined based on the inlet temperature;

determining whether the estimated Mach number is below a predefined Mach number;

upon determining that the Mach number is below the predefined Mach number, estimating a relative flow coefficient for the first stage based, at least in part on, the estimated Mach number, the inlet mass flow rate, the inlet temperature, the inlet pressure, the shaft rotational speed, the specific heat constant ratio, and the one or more pre-determined gas turbine tuning parameters;

determining a relative pressure coefficient for the first stage based on the relative flow coefficient using one or more non-dimensional characteristics plots and the one or more pre-determined gas turbine tuning parameters, wherein the one or more non-dimensional characteristics plots are accessed from the knowledge database;

determining an efficiency of the first stage based, at least in part, on the relative pressure coefficient, the relative flow coefficient, and the one or more non-dimensional characteristics plots;

estimating the outlet mass flow rate, the outlet pressure, the outlet temperature, and the outlet velocity for the first stage based, at least in part, on the relative flow coefficient, the relative pressure coefficient, the efficiency, and the Mach number;

identifying the outlet mass flow rate as the inlet mass flow rate, the outlet pressure as the inlet pressure, the outlet temperature as the inlet temperature, and a next stage of the one or more stages as the first stage;

until all the stages in the one or more stages are identified;

estimate combustor output data associated with combusted gases of the gas turbine system based, at least in part, on the outlet mass flow rate, the outlet pressure, the outlet temperature and the outlet velocity, and the combustor associated input data, the combusted output data comprising a combustor pressure, a combustor temperature, a combustor mass flow rate and composition of combusted gases;

estimate turbine output data associated with exhaust gases of a turbine of the gas turbine system based, at least in part, on the outlet mass flow rate, the outlet pressure, the outlet temperature and the outlet velocity, the combustor output data, and the turbine associated input data;

determine an estimated value associated with each steady state gas turbine performance parameter of the one or more steady state gas turbine performance parameters based, at least in part, on the outlet mass flow rate, the outlet pressure, the outlet temperature, the outlet velocity, the combustor output data, and the turbine output data;

determine an estimated value associated with each transient gas turbine state variable of the one or more transient gas turbine state variables based on the estimated value associated with each steady state gas turbine performance parameter using one or more transient gas turbine component models, and the one or more transient gas turbine component models are accessed from a model database, wherein the one or more transient gas turbine component models comprise one of: one or more physics-based models, and one or more data-driven models;

determine whether estimated value of each transient gas turbine state variable of the one or more transient gas turbine state variables is within predefined threshold limits defined for the respective transient gas turbine state variable;

upon determining that estimated value for each transient gas turbine state variable of the one or more transient gas turbine state variables is not within the predefined threshold limits defined for the respective transient gas turbine state variable, solving a process optimization problem to identify optimal process settings that maintain estimated value of each transient gas turbine state variable within the predefined threshold limits defined for the respective transient gas turbine state variable; and
display the optimal process settings.

6. The system as claimed in claim 5, wherein the one or more hardware processors are further caused to:

compute a prediction performance quality index by comparing estimated values of the one or more steady state gas turbine process parameters with real-time values of the one or more steady state gas turbine process parameters;
determine whether computed predictive performance quality index is below a pre-defined predictive performance quality index threshold; and
upon determining that the computed predictive performance quality index is below the predefined predictive performance quality index threshold, initiate design point calibration for tuning one or more pre-determined gas turbine tuning parameters such that the computed predictive performance quality index remain above the pre-defined predictive performance quality index threshold, wherein the one or more tuned pre-determined gas turbine tuning parameters are stored in the knowledge database.

7. The system as claimed in claim 5, wherein the one or more hardware processors are further caused to:

receive one or more new sets of compressor associated input data;
estimate compressor outlet pressure for each new set of compressor associated input data of the one or more new sets of compressor associated input data;
create a compressor performance map based on the compressor outlet pressure estimated for each new set of compressor associated input data of the one or more new sets of compressor associated input data, wherein the compressor performance map comprises one or more contours, wherein each contour is associated with each new set of compressor associated input data that has same non-dimensional rotational speed, and wherein the non-dimensional rotational speed is obtained by dividing new rotational speed by square root of new inlet temperature present in the respective new set of compressor associated input data;
identify an inflection point for each contour of the one or more contours in the compressor performance map; and
display a surge point for each new compressor associated input data based on the inflection point identified for the corresponding new compressor associated input data.

8. The system as claimed in claim 5, wherein the one or more hardware processors are further caused to:

upon determining that the Mach number is not below the predefined Mach number, identify the compressor associated input data as a choke point for the first stage; and
display the choke point of the first stage and a choking notification, the choking notification comprising a message to modify at least one of the inlet mass flow rate and the inlet IGV angle so that choking of the compressor in the first stage is avoided.

9. One or more non-transitory machine-readable information storage mediums comprising one or more instructions which when executed by one or more hardware processors cause:

receiving, by a gas turbine performance optimization system (GTPOS), real-time sensor data and non-real time data from one or more data sources;
pre-processing, by the GTPOS, the real-time sensor data, and the non-real time data to obtain preprocessed data;
estimating, by the GTPOS, one or more process parameters associated with a gas turbine system based on the preprocessed data using one or more soft sensors;
generating, by the GTPOS, input data associated with the gas turbine system by combining the one or more process parameters and the preprocessed data, wherein the input data comprises one or more of: compressor associated input data, combustor associated input data, turbine associated input data, and gas turbine performance data, wherein the compressor associated input data comprises an inlet mass flow rate, an inlet temperature, an inlet pressure, an inlet guide vane (IGV) angle, and a shaft rotational speed, and wherein the gas turbine performance data comprises a real-time value associated with each steady state gas turbine performance parameter of one or more steady state gas turbine performance parameters and a real-time value associated with each transient gas turbine state variable of one or more transient gas turbine state variables;

determining, by the GTPOS, an outlet mass flow rate, an outlet pressure, an outlet temperature, and an outlet velocity for each stage of one or more stages of the compressor using the compressor associated input data and a compressor cross section area by iteratively performing:

estimating, by the GTPOS, a Mach number of a first stage of the one or more stages based, at least in part, on the compressor cross section area, the IGV angle, a real gas constant, a specific heat constant ratio and one or more pre-determined gas turbine tuning parameters using a predefined Mach number calculation formula, wherein the one or more pre-determined gas turbine tuning parameters are accessed from a knowledge database and the real gas constant is accessed from a laboratory database, and wherein the specific heat constant ratio is determined based on the inlet temperature;

determining, by the GTPOS, whether the estimated Mach number is below a predefined Mach number;

upon determining that the Mach number is below the predefined Mach number, estimating, by the GTPOS, a relative flow coefficient for the first stage based, at least in part on, the estimated Mach number, the inlet mass flow rate, the inlet temperature, the inlet pressure, the shaft rotational speed, the specific heat constant ratio, and the one or more pre-determined gas turbine tuning parameters;

determining, by the GTPOS, a relative pressure coefficient for the first stage based on the relative flow coefficient using one or more non-dimensional characteristics plots and the one or more pre-determined gas turbine tuning parameters, wherein the one or more non-dimensional characteristics plots are accessed from the knowledge database;

determining, by the GTPOS, an efficiency of the first stage based, at least in part, on the relative pressure coefficient, the relative flow coefficient, and the one or more non-dimensional characteristics plots;

estimating, by the GTPOS, the outlet mass flow rate, the outlet pressure, the outlet temperature, and the outlet velocity for the first stage based, at least in part, on the relative flow coefficient, the relative pressure coefficient, the efficiency, and the Mach number; and

identifying, by the GTPOS, the outlet mass flow rate as the inlet mass flow rate, the outlet pressure as the inlet pressure, the outlet temperature as the inlet temperature, and a next stage of the one or more stages as the first stage,

until all the stages in the one or more stages are identified;

estimating, by the GTPOS, combustor output data associated with combusted gases of the gas turbine system based, at least in part, on the outlet mass flow rate, the outlet pressure, the outlet temperature and the outlet velocity, and the combustor associated input data, the combusted output data comprising a combustor pressure, a combustor temperature, a combustor mass flow rate and composition of combusted gases;

estimating, by the GTPOS, turbine output data associated with exhaust gases of a turbine of the gas turbine system based, at least in part, on the outlet mass flow rate, the outlet pressure, the outlet temperature and the outlet velocity, the combustor output data, and the turbine associated input data;

determining, by the GTPOS, an estimated value associated with each steady state gas turbine performance parameter of the one or more steady state gas turbine performance parameters based, at least in part, on the outlet mass flow rate, the outlet pressure, the outlet temperature, the outlet velocity, the combustor output data, and the turbine output data;

determining, by the GTPOS, an estimated value associated with each transient gas turbine state variable of the one or more transient gas turbine state variables based on the estimated value associated with each steady state gas turbine performance parameter using one or more transient gas turbine component models, and the one or more transient gas turbine component models are accessed from a model database, wherein the one or more transient gas turbine component models comprise one of: one or more physics-based models, and one or more data-driven models;

determining, by the GTPOS, whether estimated value of each transient gas turbine state variable of the one or more transient gas turbine state variables is within predefined threshold limits defined for the respective transient gas turbine state variable;

upon determining that estimated value for each transient gas turbine state variable of the one or more transient gas turbine state variables is not within the predefined threshold limits defined for the respective transient gas turbine state variable, solving, by the GTPOS, a process optimization problem to identify optimal process settings that maintain estimated value of each transient gas turbine state variable within the predefined threshold limits defined for the respective transient gas turbine state variable; and

displaying, by the GTPOS, the optimal process settings.

10. The one or more non-transitory machine-readable information storage mediums of claim 9, wherein the one or more instructions which when executed by the one or more hardware processors further cause:

computing, by the GTPOS, a prediction performance quality index by comparing estimated values of the one or more steady state gas turbine process parameters with real-time values of the one or more steady state gas turbine process parameters;

determining, by the GTPOS, whether computed predictive performance quality index is below a pre-defined predictive performance quality index threshold;

upon determining that the computed predictive performance quality index is below the predefined predictive performance quality index threshold, initiating, by the GTPOS, design point calibration for tuning one or more pre-determined gas turbine tuning parameters such that the computed predictive performance quality index remain above the pre-defined predictive performance quality index threshold, wherein the one or more tuned pre-determined gas turbine tuning parameters are stored in the knowledge database.

11. The one or more non-transitory machine-readable information storage mediums of claim 9, wherein the one or more instructions which when executed by the one or more hardware processors further cause:

receiving, by the GTPOS, one or more new sets of compressor associated input data;

estimating, by the GTPOS, compressor outlet pressure for each new sets of compressor associated input data of the one or more new sets of compressor associated input data;

creating, by the GTPOS, a compressor performance map based on the compressor outlet pressure estimated for each new set of compressor associated input data of the one or more new sets of compressor associated input data, wherein the compressor performance map comprises one or more contours, wherein each contour is associated with each new set of compressor associated input data that has same non-dimensional rotational speed, and wherein the non-dimensional rotational speed is obtained by dividing new shaft rotational speed by square root of new inlet temperature present in the respective new set of compressor associated input data;

identifying, by the GTPOS, an inflection point for each contour of the one or more contours in the compressor performance map; and

displaying, by the GTPOS, a surge point for each new compressor associated input data based on the inflection point identified for the corresponding new compressor associated input data.

12. The one or more non-transitory machine-readable information storage mediums of claim 9, wherein the one or more instructions which when executed by the one or more hardware processors further cause:

upon determining that the Mach number is not below the predefined Mach number,

identifying, by the GTPOS, the compressor associated input data as a choke point for the first stage; and

displaying, by the GTPOS, the choke point of the first stage and a choking notification, the choking notification comprising a message to modify at least one of the inlet mass flow rate and the inlet IGV angle so that choking of the compressor in the first stage is avoided.

**Patentansprüche**

1. Prozessorimplementiertes Verfahren, umfassend:

Empfangen, durch ein Gasturbinenleistungsoptimierungssystem (GTPOS) über einen oder mehrere Hardwareprozessoren, von Echtzeitsensordaten und Nicht-Echtzeitdaten von einer oder mehreren Datenquellen (402);

Vorverarbeiten, durch das GTPOS über den einen oder die mehreren Hardwareprozessoren, der Echtzeitsensordaten und der Nicht-Echtzeitdaten, um vorverarbeitete Daten zu erhalten (404);

Schätzen, durch das GTPOS über den einen oder die mehreren Hardwareprozessoren, eines oder mehrerer Prozessparameter, die einem Gasturbinensystem zugeordnet sind, basierend auf den vorverarbeiteten Daten unter Verwendung eines oder mehrerer weicher Sensoren (406);

Erzeugen, durch das GTPOS über den einen oder die mehreren Hardwareprozessoren, von Eingangsdaten, die dem Gasturbinensystem zugeordnet sind, durch Kombinieren des einen oder der mehreren Prozessparameter und der vorverarbeiteten Daten, wobei die Eingangsdaten eines oder mehrere umfassen von: kompressorzugeordneten Eingangsdaten, brennkammerzugeordneten Eingangsdaten, turbinenzugeordneten Eingangsdaten und Gasturbinenleistungsdaten, wobei die kompressorzugeordneten Eingangsdaten eine Einlassmassendurchsatzrate, eine Einlasstemperatur, einen Einlassdruck, einen Einlassleitschaufelwinkel (IGV-Winkel) und eine Wellendrehzahl umfassen, und wobei die Gasturbinenleistungsdaten einen Echtzeitwert, der jedem stationären Gasturbinenleistungsparameter von einem oder mehreren stationären Gasturbinenleistungsparametern zugeordnet ist, und einen Echtzeitwert, der jeder transienten Gasturbinenzustandsvariablen von einer oder mehreren transienten Gasturbinenzustandsvariablen zugeordnet ist, umfassen (408);

Bestimmen, durch das GTPOS über den einen oder die mehreren Hardwareprozessoren, einer Auslassmassendurchsatzrate, eines Auslassdrucks, einer Auslasstemperatur und einer Auslassgeschwindigkeit für jede Stufe von einer oder mehreren Stufen des Kompressors unter Verwendung der kompressorzugeordneten Eingangsdaten und einer Kompressorquerschnittsfläche durch iteratives Durchführen (410) von:

Schätzen, durch das GTPOS über den einen oder die mehreren Hardwareprozessoren, einer Mach-Zahl einer ersten Stufe der einen oder mehreren Stufen, basierend zumindest teilweise auf der Kompressorquerschnittsfläche, dem IGV-Winkel, einer realen Gaskonstante, einem spezifischen Wärmekonstantenverhältnis und einem oder mehreren vorbestimmten Gasturbinenabstimmparametern unter Verwendung einer vordefinierten Mach-Zahl-Berechnungsformel, wobei auf den einen oder die mehreren vorbestimmten Gasturbinenabstimmparameter von einer Wissensdatenbank zugegriffen wird und auf die reale Gaskonstante von einer Labordatenbank zugegriffen wird, und wobei das spezifische Wärmekonstantenverhältnis basierend auf der Einlasstemperatur bestimmt wird (410a);

Bestimmen, durch das GTPOS über den einen oder die mehreren Hardwareprozessoren, ob die geschätzte Mach-Zahl unter einer vordefinierten Mach-Zahl liegt (410b);

beim Bestimmen, dass die Mach-Zahl unter der vordefinierten Mach-Zahl liegt, Schätzen, durch das GTPOS über den einen oder die mehreren Hardwareprozessoren, eines relativen Durchsatzkoeffizienten für die erste Stufe, basierend zumindest teilweise auf der geschätzten Mach-Zahl, der Einlassmassendurchsatzrate, der Einlasstemperatur, dem Einlassdruck, der Wellendrehzahl, dem spezifischen Wärmekonstantenverhältnis und dem einen oder den mehreren vorbestimmten Gasturbinenabstimmparametern (410c);

Bestimmen, durch das GTPOS über den einen oder die mehreren Hardwareprozessoren, eines relativen Druckkoeffizienten für die erste Stufe basierend auf dem relativen Durchsatzkoeffizienten unter Verwendung einer oder mehrerer nichtdimensionaler Kennliniendarstellungen und des einen oder der mehreren vorbestimmten Gasturbinenabstimmparameter, wobei auf die eine oder die mehreren nichtdimensionalen Kennliniendarstellungen von der Wissensdatenbank zugegriffen wird (410d);

Bestimmen, durch das GTPOS über den einen oder die mehreren Hardwareprozessoren, eines Wirkungsgrads der ersten Stufe, basierend zumindest teilweise auf dem relativen Druckkoeffizienten, dem relativen Durchsatzkoeffizienten und der einen oder den mehreren nichtdimensionalen Kennliniendarstellungen (410e);

Schätzen, durch das GTPOS über den einen oder die mehreren Hardwareprozessoren, der Auslassmassendurchsatzrate, des Auslassdrucks, der Auslasstemperatur und der Auslassgeschwindigkeit für die erste Stufe, basierend zumindest teilweise auf dem relativen Durchsatzkoeffizienten, dem relativen Druckkoeffizienten, dem Wirkungsgrad und der Mach-Zahl (410f); und

Identifizieren, durch das GTPOS über den einen oder die mehreren Hardwareprozessoren, der Auslassmassendurchsatzrate als die Einlassmassendurchsatzrate, des Auslassdrucks als den Einlassdruck, der Auslasstemperatur als die Einlasstemperatur und einer nächsten Stufe der einen oder der mehreren Stufen als die erste Stufe,

bis alle Stufen in der einen oder den mehreren Stufen identifiziert sind (410g);

Schätzen, durch das GTPOS über den einen oder die mehreren Hardwareprozessoren, von Brennkammerausgangsdaten, die verbrannten Gasen des Gasturbinensystems zugeordnet sind, basierend zumindest teilweise auf der Auslassmassendurchsatzrate, dem Auslassdruck, der Auslasstemperatur und der Auslassgeschwindigkeit und den brennkammerzugeordneten Eingangsdaten, wobei die verbrannten Ausgangsdaten einen Brennkammerdruck, eine Brennkammertemperatur, eine Brennkammermassendurchsatzrate und eine Zusammensetzung von verbrannten Gasen umfassen (412);

Schätzen, durch das GTPOS über den einen oder die mehreren Hardwareprozessoren, von Turbinenausgangsdaten, die Abgasen einer Turbine des Gasturbinensystems zugeordnet sind, basierend zumindest teilweise auf der Auslassmassendurchsatzrate, dem Auslassdruck, der Auslasstemperatur und der Auslassgeschwindigkeit, den Brennkammerausgangsdaten und den turbinenzugeordneten Eingangsdaten (414);

Bestimmen, durch das GTPOS über den einen oder die mehreren Hardwareprozessoren, eines Schätzwerts, der jedem stationären Gasturbinenleistungsparameter des einen oder der mehreren stationären Gasturbinenleistungsparameter zugeordnet ist, basierend zumindest teilweise auf der Auslassmassendurchsatzrate, dem Auslassdruck, der Auslasstemperatur, der Auslassgeschwindigkeit, den Brennkammerausgangsdaten und den Turbinenausgangsdaten (416);

Bestimmen, durch das GTPOS über den einen oder die mehreren Hardwareprozessoren, eines Schätzwerts, der jeder transienten Gasturbinenzustandsvariablen der einen oder der mehreren transienten Gasturbinenzustandsvariablen zugeordnet ist, basierend auf dem Schätzwert, der jedem stationären Gasturbinenleistungsparameter zugeordnet ist, unter Verwendung eines oder mehrerer transienter Gasturbinenkomponentenmodelle, und wobei auf das eine oder die mehreren transienten Gasturbinenkomponentenmodelle von einer Modelldatenbank zugegriffen wird, wobei das eine oder die mehreren transienten Gasturbinenkomponentenmodelle eines umfassen von: einem oder mehreren physikbasierten Modellen und einem oder mehreren datengetriebenen Modellen (418);

Bestimmen, durch das GTPOS über den einen oder die mehreren Hardwareprozessoren, ob ein Schätzwert jeder transienten Gasturbinenzustandsvariablen der einen oder der mehreren transienten Gasturbinenzustandsvariablen innerhalb vordefinierter Schwellenwertgrenzen liegt, die für die jeweilige transiente Gasturbinenzustandsvariable definiert sind (420);

beim Bestimmen, dass ein Schätzwert für jede transiente Gasturbinenzustandsvariable der einen oder der mehreren transienten Gasturbinenzustandsvariablen nicht innerhalb der vordefinierten Schwellenwertgrenzen liegt, die für die jeweilige transiente Gasturbinenzustandsvariable definiert sind, Lösen, durch das GTPOS über den einen oder die mehreren Hardwareprozessoren, eines Prozessoptimierungsproblems, um optimale Prozesseinstellungen zu identifizieren, die einen Schätzwert jeder transienten Gasturbinenzustandsvariablen innerhalb der vordefinierten Schwellenwertgrenzen halten, die für die jeweilige transiente Gasturbinenzustandsvariable definiert sind (422); und

Anzeigen, durch das GTPOS über den einen oder die mehreren Hardwareprozessoren, der optimalen Prozesseinstellungen (424).

2. Prozessorimplementiertes Verfahren nach Anspruch 1, ferner umfassend:

Berechnen, durch das GTPOS über den einen oder die mehreren Hardwareprozessoren, eines Vorhersageleistungsqualitätsindex durch Vergleichen von Schätzwerten des einen oder der mehreren stationären Gasturbinenprozessparameter mit Echtzeitwerten des einen oder der mehreren stationären Gasturbinenprozessparameter;

Bestimmen, durch das GTPOS über den einen oder die mehreren Hardwareprozessoren, ob ein berechneter prädiktiver Leistungsqualitätsindex unter einem vordefinierten prädiktiven Leistungsqualitätsindexschwellenwert liegt;

beim Bestimmen, dass der berechnete prädiktive Leistungsqualitätsindex unter dem vordefinierten prädiktiven Leistungsqualitätsindexschwellenwert liegt, Einleiten, durch das GTPOS über den einen oder die mehreren Hardwareprozessoren, einer Entwurfspunktkalibrierung zum Abstimmen eines oder mehrerer vorbestimmter Gasturbinenabstimmparameter, sodass der berechnete prädiktive Leistungsqualitätsindex über dem vordefinierten prädiktiven Leistungsqualitätsindexschwellenwert bleibt, wobei der eine oder die mehreren abgestimmten vorbestimmten Gasturbinenabstimmparameter in der Wissensdatenbank gespeichert sind.

3. Prozessorimplementiertes Verfahren nach Anspruch 1, ferner umfassend:

Empfangen, durch das GTPOS über den einen oder die mehreren Hardwareprozessoren, eines oder mehrerer neuer Sätze von kompressorassoziierten Eingangsdaten;

Schätzen, durch das GTPOS über den einen oder die mehreren Hardwareprozessoren, eines Kompressorauslassdrucks für jeden neuen Satz von kompressorassoziierten Eingangsdaten des einen oder der mehreren neuen Sätze von kompressorassoziierten Eingangsdaten;

Erzeugen, durch das GTPOS über den einen oder die mehreren Hardwareprozessoren, einer Kompressorleistungskarte basierend auf dem Kompressorauslassdruck, der für jeden neuen Satz von kompressorassoziierten Eingangsdaten des einen oder der mehreren neuen Sätze von kompressorassoziierten Eingangsdaten geschätzt wird, wobei die Kompressorleistungskarte eine oder mehrere Konturen umfasst, wobei jede Kontur jedem neuen Satz von kompressorassoziierten Eingangsdaten zugeordnet ist, der dieselbe nichtdimensionale Drehzahl aufweist, und wobei die nichtdimensionale Drehzahl durch Teilen einer neuen Wellendrehzahl durch eine Quadratwurzel einer neuen Einlasstemperatur, die in dem jeweiligen neuen Satz von kompressorassoziierten Eingangsdaten vorhanden ist, erhalten wird;

Identifizieren, durch das GTPOS über den einen oder die mehreren Hardwareprozessoren, eines Wendepunkts für jede Kontur der einen oder der mehreren Konturen in der Kompressorleistungskarte; und

Anzeigen, durch das GTPOS über den einen oder die mehreren Hardwareprozessoren, eines Pumppunkts für jede neue kompressorassoziierte Eingangsdaten basierend auf dem Wendepunkt, der für die entsprechenden neuen kompressorassoziierten Eingangsdaten identifiziert wird.

4. Prozessorimplementiertes Verfahren nach Anspruch 1, ferner umfassend:

beim Bestimmen, dass die Mach-Zahl nicht unter der vordefinierten Mach-Zahl liegt,

Identifizieren, durch das GTPOS über den einen oder die mehreren Hardwareprozessoren, der kompressorassoziierten Eingangsdaten als einen Drosselpunkt für die erste Stufe; und

Anzeigen, durch das GTPOS über den einen oder die mehreren Hardwareprozessoren, des Drosselpunkts der ersten Stufe und einer Drosselbenachrichtigung, wobei die Drosselbenachrichtigung eine Nachricht zum Modifizieren der Einlassmassendurchsatzrate und/oder des Einlass-IGV-Winkels umfasst, sodass ein Drosseln des Kompressors in der ersten Stufe vermieden wird.

5. Gasturbinenleistungsoptimierungssystem (GTPOS) (200), umfassend:

einen Speicher (208), der Anweisungen speichert;

eine oder mehrere Kommunikationsschnittstellen (210); und

einen oder mehrere Hardwareprozessoren (206), die über die eine oder die mehreren Kommunikationsschnittstellen (210) mit dem Speicher (208) gekoppelt sind, wobei der eine oder die mehreren Hardwareprozessoren (206) durch die Anweisungen konfiguriert sind zum:

Empfangen von Echtzeitsensordaten und Nicht-Echtzeitdaten von einer oder mehreren Datenquellen;

Vorverarbeiten der Echtzeitsensordaten und der Nicht-Echtzeitdaten, um vorverarbeitete Daten zu erhalten;

Schätzen eines oder mehrerer Prozessparameter, die einem Gasturbinensystem zugeordnet sind, basierend auf den vorverarbeiteten Daten unter Verwendung eines oder mehrerer weicher Sensoren;

Erzeugen von Eingangsdaten, die dem Gasturbinensystem zugeordnet sind, durch Kombinieren des einen oder der mehreren Prozessparameter und der vorverarbeiteten Daten, wobei die Eingangsdaten eines oder mehrere umfassen von: kompressorzugeordneten Eingangsdaten, brennkammerzugeordneten Eingangsdaten, turbinenzugeordneten Eingangsdaten und Gasturbinenleistungsdaten, wobei die kompressorzugeordneten Eingangsdaten eine Einlassmassendurchsatzrate, eine Einlasstemperatur, einen Einlassdruck, einen Einlassleitschaufelwinkel (IGV-Winkel) und eine Wellendrehzahl umfassen, und wobei die Gasturbinenleistungsdaten einen Echtzeitwert, der jedem stationären Gasturbinenleistungsparameter von einem oder mehreren stationären Gasturbinenleistungsparametern zugeordnet ist, und einen Echtzeitwert, der jeder transienten Gasturbinenzustandsvariablen von einer oder mehreren transienten Gasturbinenzustandsvariablen zugeordnet ist, umfassen;

Bestimmen einer Auslassmassendurchsatzrate, eines Auslassdrucks, einer Auslasstemperatur und einer Auslassgeschwindigkeit für jede Stufe von einer oder mehreren Stufen des Kompressors unter Verwendung der kompressorzugeordneten Eingangsdaten und einer Kompressorquerschnittsfläche durch iteratives Durchführen von:

Schätzen einer Mach-Zahl einer ersten Stufe der einen oder mehreren Stufen, basierend zumindest teilweise auf der Kompressorquerschnittsfläche, dem IGV-Winkel, einer realen Gaskonstante, einem spezifischen Wärmekonstantenverhältnis und einem oder mehreren vorbestimmten Gasturbinenabstimmparametern unter Verwendung einer vordefinierten Mach-Zahl-Berechnungsformel, wobei auf den einen oder die mehreren vorbestimmten Gasturbinenabstimmparameter von einer Wissensdatenbank zugegriffen wird und auf die reale Gaskonstante von einer Labordatenbank zugegriffen wird, und wobei das spezifische Wärmekonstantenverhältnis basierend auf der Einlasstemperatur bestimmt wird;

Bestimmen, ob die geschätzte Mach-Zahl unter einer vordefinierten Mach-Zahl liegt;

beim Bestimmen, dass die Mach-Zahl unter der vordefinierten Mach-Zahl liegt, Schätzen eines relativen Durchsatzkoeffizienten für die erste Stufe, basierend zumindest teilweise auf der geschätzten Mach-Zahl, der Einlassmassendurchsatzrate, der Einlasstemperatur, dem Einlassdruck, der Wellendrehzahl, dem spezifischen Wärmekonstantenverhältnis und dem einen oder den mehreren vorbestimmten Gasturbinenabstimmparametern;

Bestimmen eines relativen Druckkoeffizienten für die erste Stufe basierend auf dem relativen Durchsatzkoeffizienten unter Verwendung einer oder mehrerer nichtdimensionaler Kennliniendarstellungen und des einen oder der mehreren vorbestimmten Gasturbinenabstimmparameter, wobei auf die eine oder die mehreren nichtdimensionalen Kennliniendarstellungen von der Wissensdatenbank zugegriffen wird;

Bestimmen eines Wirkungsgrads der ersten Stufe, basierend zumindest teilweise auf dem relativen Druckkoeffizienten, dem relativen Durchsatzkoeffizienten und der einen oder den mehreren nichtdimensionalen Kennliniendarstellungen;

Schätzen der Auslassmassendurchsatzrate, des Auslassdrucks, der Auslasstemperatur und der Auslassgeschwindigkeit für die erste Stufe, basierend zumindest teilweise auf dem relativen Durchsatzkoeffizienten, dem relativen Druckkoeffizienten, dem Wirkungsgrad und der Mach-Zahl;
Identifizieren der Auslassmassendurchsatzrate als die Einlassmassendurchsatzrate, des Auslassdrucks als den Einlassdruck, der Auslasstemperatur als die Einlasstemperatur und einer nächsten Stufe der einen oder der mehreren Stufen als die erste Stufe;
bis alle Stufen in der einen oder den mehreren Stufen identifiziert sind;

Schätzen von Brennkammerausgangsdaten, die verbrannten Gasen des Gasturbinensystems zugeordnet sind, basierend zumindest teilweise auf der Auslassmassendurchsatzrate, dem Auslassdruck, der Auslasstemperatur und der Auslassgeschwindigkeit und den brennkammerzugeordneten Eingangsdaten, wobei die verbrannten Ausgangsdaten einen Brennkammerdruck, eine Brennkammertemperatur, eine Brennkammermassendurchsatzrate und eine Zusammensetzung von verbrannten Gasen umfassen;
Schätzen von Turbinenausgangsdaten, die Abgasen einer Turbine des Gasturbinensystems zugeordnet sind, basierend zumindest teilweise auf der Auslassmassendurchsatzrate, dem Auslassdruck, der Auslasstemperatur und der Auslassgeschwindigkeit, den Brennkammerausgangsdaten und den turbinenzugeordneten Eingangsdaten;
Bestimmen eines Schätzwerts, der jedem stationären Gasturbinenleistungsparameter des einen oder der mehreren stationären Gasturbinenleistungsparameter zugeordnet ist, basierend zumindest teilweise auf der Auslassmassendurchsatzrate, dem Auslassdruck, der Auslasstemperatur, der Auslassgeschwindigkeit, den Brennkammerausgangsdaten und den Turbinenausgangsdaten;
Bestimmen eines Schätzwerts, der jeder transienten Gasturbinenzustandsvariablen der einen oder der mehreren transienten Gasturbinenzustandsvariablen zugeordnet ist, basierend auf dem Schätzwert, der jedem stationären Gasturbinenleistungsparameter zugeordnet ist, unter Verwendung eines oder mehrerer transienter Gasturbinenkomponentenmodelle, und wobei auf das eine oder die mehreren transienten Gasturbinenkomponentenmodelle von einer Modelldatenbank zugegriffen wird, wobei das eine oder die mehreren transienten Gasturbinenkomponentenmodelle eines umfassen von: einem oder mehreren physikbasierten Modellen und einem oder mehreren datengetriebenen Modellen;
Bestimmen, ob ein Schätzwert jeder transienten Gasturbinenzustandsvariablen der einen oder der mehreren transienten Gasturbinenzustandsvariablen innerhalb vordefinierter Schwellenwertgrenzen liegt, die für die jeweilige transiente Gasturbinenzustandsvariable definiert sind;
beim Bestimmen, dass ein Schätzwert für jede transiente Gasturbinenzustandsvariable der einen oder der mehreren transienten Gasturbinenzustandsvariablen nicht innerhalb der vordefinierten Schwellenwertgrenzen liegt, die für die jeweilige transiente Gasturbinenzustandsvariable definiert sind, Lösen eines Prozessoptimierungsproblems, um optimale Prozesseinstellungen zu identifizieren, die einen Schätzwert jeder transienten Gasturbinenzustandsvariablen innerhalb der vordefinierten Schwellenwertgrenzen halten, die für die jeweilige transiente Gasturbinenzustandsvariable definiert sind; und
Anzeigen der optimalen Prozesseinstellungen.

6.  System nach Anspruch 5, wobei der eine oder die mehreren Hardwareprozessoren ferner veranlasst werden zum:

Berechnen eines Vorhersageleistungsqualitätsindex durch Vergleichen von Schätzwerten des einen oder der mehreren stationären Gasturbinenprozessparameter mit Echtzeitwerten des einen oder der mehreren stationären Gasturbinenprozessparameter;
Bestimmen, ob ein berechneter prädiktiver Leistungsqualitätsindex unter einem vordefinierten prädiktiven Leistungsqualitätsindexschwellenwert liegt; und
beim Bestimmen, dass der berechnete prädiktive Leistungsqualitätsindex unter dem vordefinierten prädiktiven Leistungsqualitätsindexschwellenwert liegt, Einleiten einer Entwurfspunktkalibrierung zum Abstimmen eines oder mehrerer vorbestimmter Gasturbinenabstimmparameter, sodass der berechnete prädiktive Leistungsqualitätsindex über dem vordefinierten prädiktiven Leistungsqualitätsindexschwellenwert bleibt, wobei der eine oder die mehreren abgestimmten vorbestimmten Gasturbinenabstimmparameter in der Wissensdatenbank gespeichert sind.

7.  System nach Anspruch 5, wobei der eine oder die mehreren Hardwareprozessoren ferner veranlasst werden zum:

Empfangen eines oder mehrerer neuer Sätze von kompressorassoziierten Eingangsdaten;
Schätzen eines Kompressorauslassdrucks für jeden neuen Satz von kompressorassoziierten Eingangsdaten des einen oder der mehreren neuen Sätze von kompressorassoziierten Eingangsdaten;
Erzeugen einer Kompressorleistungskarte basierend auf dem Kompressorauslassdruck, der für jeden neuen Satz von kompressorassoziierten Eingangsdaten des einen oder der mehreren neuen Sätze von kompressorassoziierten Eingangsdaten geschätzt wird, wobei die Kompressorleistungskarte eine oder mehrere Konturen umfasst, wobei jede Kontur jedem neuen Satz von kompressorassoziierten Eingangsdaten zugeordnet ist, der dieselbe nichtdimensionale Drehzahl aufweist, und wobei die nichtdimensionale Drehzahl durch Teilen einer neuen Drehzahl durch eine Quadratwurzel einer neuen Einlasstemperatur, die in dem jeweiligen neuen Satz von kompressorassoziierten Eingangsdaten vorhanden ist, erhalten wird;

Identifizieren eines Wendepunkts für jede Kontur der einen oder der mehreren Konturen in der Kompressorleistungskarte; und

Anzeigen eines Pumppunkts für jede neue kompressorassoziierte Eingangsdaten basierend auf dem Wendepunkt, der für die entsprechenden neuen kompressorassoziierten Eingangsdaten identifiziert wird.

8. System nach Anspruch 5, wobei der eine oder die mehreren Hardwareprozessoren ferner zu Folgendem veranlasst werden:

beim Bestimmen, dass die Mach-Zahl nicht unter der vordefinierten Mach-Zahl liegt, Identifizieren der kompressorassoziierten Eingangsdaten als einen Drosselpunkt für die erste Stufe; und

Anzeigen des Drosselpunkts der ersten Stufe und einer Drosselbenachrichtigung, wobei die Drosselbenachrichtigung eine Nachricht zum Modifizieren der Einlassmassendurchsatzrate und/oder des Einlass-IGV-Winkels umfasst, sodass ein Drosseln des Kompressors in der ersten Stufe vermieden wird.

9. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes veranlassen:

Empfangen, durch ein Gasturbinenleistungsoptimierungssystem (GTPOS), von Echtzeitsensordaten und Nicht-Echtzeitdaten von einer oder mehreren Datenquellen;

Vorverarbeiten, durch das GTPOS, der Echtzeitsensordaten und der Nicht-Echtzeitdaten, um vorverarbeitete Daten zu erhalten;

Schätzen, durch das GTPOS, eines oder mehrerer Prozessparameter, die einem Gasturbinensystem zugeordnet sind, basierend auf den vorverarbeiteten Daten unter Verwendung eines oder mehrerer weicher Sensoren;

Erzeugen, durch das GTPOS, von Eingangsdaten, die dem Gasturbinensystem zugeordnet sind, durch Kombinieren des einen oder der mehreren Prozessparameter und der vorverarbeiteten Daten, wobei die Eingangsdaten eines oder mehrere umfassen von: kompressorzugeordneten Eingangsdaten, brennkammerzugeordneten Eingangsdaten, turbinenzugeordneten Eingangsdaten und Gasturbinenleistungsdaten, wobei die kompressorzugeordneten Eingangsdaten eine Einlassmassendurchsatzrate, eine Einlasstemperatur, einen Einlassdruck, einen Einlassleitschaufelwinkel (IGV-Winkel) und eine Wellendrehzahl umfassen, und wobei die Gasturbinenleistungsdaten einen Echtzeitwert, der jedem stationären Gasturbinenleistungsparameter von einem oder mehreren stationären Gasturbinenleistungsparametern zugeordnet ist, und einen Echtzeitwert, der jeder transienten Gasturbinenzustandsvariablen von einer oder mehreren transienten Gasturbinenzustandsvariablen zugeordnet ist, umfassen;

Bestimmen, durch das GTPOS, einer Auslassmassendurchsatzrate, eines Auslassdrucks, einer Auslasstemperatur und einer Auslassgeschwindigkeit für jede Stufe von einer oder mehreren Stufen des Kompressors unter Verwendung der kompressorzugeordneten Eingangsdaten und einer Kompressorquerschnittsfläche durch iteratives Durchführen von:

Schätzen, durch das GTPOS, einer Mach-Zahl einer ersten Stufe der einen oder mehreren Stufen, basierend zumindest teilweise auf der Kompressorquerschnittsfläche, dem IGV-Winkel, einer realen Gaskonstante, einem spezifischen Wärmekonstantenverhältnis und einem oder mehreren vorbestimmten Gasturbinenabstimmparametern unter Verwendung einer vordefinierten Mach-Zahl-Berechnungsformel, wobei auf den einen oder die mehreren vorbestimmten Gasturbinenabstimmparameter von einer Wissensdatenbank zugegriffen wird und auf die reale Gaskonstante von einer Labordatenbank zugegriffen wird, und wobei das spezifische Wärmekonstantenverhältnis basierend auf der Einlasstemperatur bestimmt wird;

Bestimmen, durch das GTPOS, ob die geschätzte Mach-Zahl unter einer vordefinierten Mach-Zahl liegt;

beim Bestimmen, dass die Mach-Zahl unter der vordefinierten Mach-Zahl liegt, Schätzen, durch das GTPOS, eines relativen Durchdstzkoeffizienten für die erste Stufe, basierend zumindest teilweise auf der geschätzten Mach-Zahl, der Einlassmassendurchsatzrate, der Einlasstemperatur, dem Einlassdruck, der Wellendrehzahl, dem spezifischen Wärmekonstantenverhältnis und dem einen oder den mehreren vorbestimmten Gasturbinenabstimmparametern;

Bestimmen, durch das GTPOS, eines relativen Druckkoeffizienten für die erste Stufe basierend auf dem relativen Durchsatzkoeffizienten unter Verwendung einer oder mehrerer nichtdimensionaler Kennliniendarstellungen und des einen oder der mehreren vorbestimmten Gasturbinenabstimmparameter, wobei auf die eine oder die mehreren nichtdimensionalen Kennliniendarstellungen von der Wissensdatenbank zugegriffen wird;

Bestimmen, durch das GTPOS, eines Wirkungsgrads der ersten Stufe, basierend zumindest teilweise auf dem relativen Druckkoeffizienten, dem relativen Durchsatzkoeffizienten und der einen oder den mehreren nichtdimensionalen Kennliniendarstellungen;

Schätzen, durch das GTPOS, der Auslassmassendurchsatzrate, des Auslassdrucks, der Auslasstemperatur und der Auslassgeschwindigkeit für die erste Stufe, basierend zumindest teilweise auf dem relativen Durchsatzkoeffizienten, dem relativen Druckkoeffizienten, dem Wirkungsgrad und der Mach-Zahl; und

Identifizieren, durch das GTPOS, der Auslassmassendurchsatzrate als der Einlassmassendurchsatzrate, des Auslassdrucks als den Einlassdruck, der Auslasstemperatur als die Einlasstemperatur und einer nächsten Stufe der einen oder der mehreren Stufen als die erste Stufe,

bis alle Stufen in der einen oder den mehreren Stufen identifiziert sind;

Schätzen, durch das GTPOS, von Brennkammerausgangsdaten, die verbrannten Gasen des Gasturbinensystems zugeordnet sind, basierend zumindest teilweise auf der Auslassmassendurchsatzrate, dem Auslassdruck, der Auslasstemperatur und der Auslassgeschwindigkeit und den brennkammerzugeordneten Eingangsdaten, wobei die verbrannten Ausgangsdaten einen Brennkammerdruck, eine Brennkammertemperatur, eine Brennkammermassendurchsatzrate und eine Zusammensetzung von verbrannten Gasen umfassen;

Schätzen, durch das GTPOS, von Turbinenausgangsdaten, die Abgasen einer Turbine des Gasturbinensystems zugeordnet sind, basierend zumindest teilweise auf der Auslassmassendurchsatzrate, dem Auslassdruck, der Auslasstemperatur und der Auslassgeschwindigkeit, den Brennkammerausgangsdaten und den turbinenzugeordneten Eingangsdaten;

Bestimmen, durch das GTPOS, eines Schätzwerts, der jedem stationären Gasturbinenleistungsparameter des einen oder der mehreren stationären Gasturbinenleistungsparameter zugeordnet ist, basierend zumindest teilweise auf der Auslassmassendurchsatzrate, dem Auslassdruck, der Auslasstemperatur, der Auslassgeschwindigkeit, den Brennkammerausgangsdaten und den Turbinenausgangsdaten;

Bestimmen, durch das GTPOS, eines Schätzwerts, der jeder transienten Gasturbinenzustandsvariablen der einen oder der mehreren transienten Gasturbinenzustandsvariablen zugeordnet ist, basierend auf dem Schätzwert, der jedem stationären Gasturbinenleistungsparameter zugeordnet ist, unter Verwendung eines oder mehrerer transienter Gasturbinenkomponentenmodelle, und wobei auf das eine oder die mehreren transienten Gasturbinenkomponentenmodelle von einer Modelldatenbank zugegriffen wird, wobei das eine oder die mehreren transienten Gasturbinenkomponentenmodelle eines umfassen von: einem oder mehreren physikbasierten Modellen und einem oder mehreren datengetriebenen Modellen;

Bestimmen, durch das GTPOS, ob ein Schätzwert jeder transienten Gasturbinenzustandsvariablen der einen oder der mehreren transienten Gasturbinenzustandsvariablen innerhalb vordefinierter Schwellenwertgrenzen liegt, die für die jeweilige transiente Gasturbinenzustandsvariable definiert sind;

beim Bestimmen, dass ein Schätzwert für jede transiente Gasturbinenzustandsvariable der einen oder der mehreren transienten Gasturbinenzustandsvariablen nicht innerhalb der vordefinierten Schwellenwertgrenzen liegt, die für die jeweilige transiente Gasturbinenzustandsvariable definiert sind, Lösen, durch das GTPOS, eines Prozessoptimierungsproblems, um optimale Prozesseinstellungen zu identifizieren, die einen Schätzwert jeder transienten Gasturbinenzustandsvariablen innerhalb der vordefinierten Schwellenwertgrenzen halten, die für die jeweilige transiente Gasturbinenzustandsvariable definiert sind; und

Anzeigen, durch das GTPOS, der optimalen Prozesseinstellungen.

10. Ein oder mehrere nichtflüchtige maschinenlesbare Informationsspeichermedien nach Anspruch 9, wobei die eine oder die mehreren Anweisungen bei Ausführung durch den einen oder die mehreren Hardwareprozessoren ferner Folgendes veranlassen:

Berechnen, durch das GTPOS, eines Vorhersageleistungsqualitätsindex durch Vergleichen von Schätzwerten des einen oder der mehreren stationären Gasturbinenprozessparameter mit Echtzeitwerten des einen oder der mehreren stationären Gasturbinenprozessparameter;

Bestimmen, durch das GTPOS, ob ein berechneter prädiktiver Leistungsqualitätsindex unter einem vordefinierten prädiktiven Leistungsqualitätsindexschwellenwert liegt;

beim Bestimmen, dass der berechnete prädiktive Leistungsqualitätsindex unter dem vordefinierten prädiktiven Leistungsqualitätsindexschwellenwert liegt, Einleiten, durch das GTPOS, einer Entwurfspunktkalibrierung zum Abstimmen eines oder mehrerer vorbestimmter Gasturbinenabstimmparameter, sodass der berechnete prädiktive Leistungsqualitätsindex über dem vordefinierten prädiktiven Leistungsqualitätsindexschwellenwert bleibt, wobei der eine oder die mehreren abgestimmten vorbestimmten Gasturbinenabstimmparameter in der Wissensdatenbank gespeichert sind.

11. Ein oder mehrere nichtflüchtige maschinenlesbare Informationsspeichermedien nach Anspruch 9, wobei die eine oder die mehreren Anweisungen bei Ausführung durch den einen oder die mehreren Hardwareprozessoren ferner Folgendes veranlassen:

Empfangen, durch das GTPOS, eines oder mehrerer neuer Sätze von kompressorassoziierten Eingangsdaten; Schätzen, durch das GTPOS, eines Kompressorauslassdrucks für jeden neuen Satz von kompressorassoziierten Eingangsdaten des einen oder der mehreren neuen Sätze von kompressorassoziierten Eingangsdaten; Erzeugen, durch das GTPOS, einer Kompressorleistungskarte basierend auf dem Kompressorauslassdruck, der für jeden neuen Satz von kompressorassoziierten Eingangsdaten des einen oder der mehreren neuen Sätze von kompressorassoziierten Eingangsdaten geschätzt wird, wobei die Kompressorleistungskarte eine oder mehrere Konturen umfasst, wobei jede Kontur jedem neuen Satz von kompressorassoziierten Eingangsdaten zugeordnet ist, der dieselbe nichtdimensionale Drehzahl aufweist, und wobei die nichtdimensionale Drehzahl durch Teilen einer neuen Wellendrehzahl durch eine Quadratwurzel einer neuen Einlasstemperatur, die in dem jeweiligen neuen Satz von kompressorassoziierten Eingangsdaten vorhanden ist, erhalten wird; Identifizieren, durch das GTPOS, eines Wendepunkts für jede Kontur der einen oder der mehreren Konturen in der Kompressorleistungskarte; und Anzeigen, durch das GTPOS, eines Pumppunkts für jede neue kompressorassoziierte Eingangsdaten basierend auf dem Wendepunkt, der für die entsprechenden neuen kompressorassoziierten Eingangsdaten identifiziert wird.

12. Ein oder mehrere nichtflüchtige maschinenlesbare Informationsspeichermedien nach Anspruch 9, wobei die eine oder die mehreren Anweisungen bei Ausführung durch den einen oder die mehreren Hardwareprozessoren ferner Folgendes veranlassen:

beim Bestimmen, dass die Mach-Zahl nicht unter der vordefinierten Mach-Zahl liegt, Identifizieren, durch das GTPOS, der kompressorassoziierten Eingangsdaten als einen Drosselpunkt für die erste Stufe; und Anzeigen, durch das GTPOS, des Drosselpunkts der ersten Stufe und einer Drosselbenachrichtigung, wobei die Drosselbenachrichtigung eine Nachricht zum Modifizieren ders Einlassmassendurchsatzrate und/oder des Einlass-IGV-Winkels umfasst, sodass ein Drosseln des Kompressors in der ersten Stufe vermieden wird.

## Revendications

1. Procédé mis en œuvre par processeur, comprenant :

la réception, par un système d'optimisation de performance de turbine à gaz (GTPOS) par l'intermédiaire d'un ou plusieurs processeurs matériels, de données de capteur en temps réel et de données en temps non réel provenant d'une ou plusieurs sources de données (402) ; le prétraitement, par le GTPOS par l'intermédiaire du ou des processeurs matériels, des données de capteur en temps réel et des données en temps non réel pour obtenir des données prétraitées (404) ; l'estimation, par le GTPOS par l'intermédiaire du ou des processeurs matériels, d'un ou plusieurs paramètres de processus associés à un système de turbine à gaz sur la base des données prétraitées en utilisant un ou plusieurs capteurs logiciels (406) ; la génération, par le GTPOS par l'intermédiaire du ou des processeurs matériels, de données d'entrée associées au système de turbine à gaz en combinant le ou les paramètres de processus et les données prétraitées, dans lequel les données d'entrée comprennent un ou plusieurs parmi : des données d'entrée associées au compresseur, des données d'entrée associées à la chambre de combustion, des données d'entrée associées à la turbine et des données de performance de turbine à gaz, dans lequel les données d'entrée associées au compresseur comprennent un débit massique d'entrée, une température d'entrée, une pression d'entrée, un angle d'aube directrice d'entrée (IGV) et une vitesse de rotation d'arbre, et dans lequel les données de performance de turbine à gaz comprennent une valeur en temps réel associée à chaque paramètre de performance de turbine à gaz en régime permanent d'un ou plusieurs paramètres de performance de turbine à gaz en régime permanent et une valeur en temps réel associée à chaque variable d'état transitoire de turbine à gaz d'une ou plusieurs variables d'état transitoires de turbine à gaz (408) ;

la détermination, par le GTPOS par l'intermédiaire du ou des processeurs matériels, d'un débit massique de sortie, d'une pression de sortie, d'une température de sortie et d'une vitesse de sortie pour chaque étape d'un ou plusieurs étapes du compresseur en utilisant les données d'entrée associées au compresseur et une aire de section transversale de compresseur en effectuant de manière itérative (410) :

l'estimation, par le GTPOS par l'intermédiaire du ou des processeurs matériels, d'un nombre de Mach pour une première étape des étapes sur la base, au moins en partie, de l'aire de section transversale de compresseur, de l'angle d'IGV, d'une constante de gaz réelle, d'un rapport de constante thermique spécifique et d'un ou plusieurs paramètres de réglage de turbine à gaz prédéterminés en utilisant une formule prédéfinie de calcul de nombre de Mach, dans lequel le ou les paramètres de réglage de turbine à gaz prédéterminés sont accessibles à partir d'une base de données de connaissances et la constante de gaz réelle est accessible à partir d'une base de données de laboratoire, et dans lequel le rapport de constante thermique spécifique est déterminé sur la base de la température d'entrée (410a) ;

la détermination, par le GTPOS par l'intermédiaire du ou des processeurs matériels, si le nombre de Mach estimé est inférieur à un nombre de Mach prédéfini (410b) ;

lors de la détermination que le nombre de Mach est inférieur au nombre de Mach prédéfini, l'estimation, par le GTPOS par l'intermédiaire du ou des processeurs matériels, d'un coefficient de flux relatif pour la première étape sur la base, au moins en partie, du nombre de Mach estimé, du débit massique d'entrée, de la température d'entrée, de la pression d'entrée, de la vitesse de rotation d'arbre, du rapport de constante thermique spécifique et du ou des paramètres de réglage de turbine à gaz prédéterminés (410c) ;

la détermination, par le GTPOS par l'intermédiaire du ou des processeurs matériels, d'un coefficient de pression relatif pour le première étape sur la base du coefficient de flux relatif en utilisant un ou plusieurs graphiques de caractéristiques non dimensionnelles et le ou les paramètres de réglage de turbine à gaz prédéterminés, dans lequel le ou les graphiques de caractéristiques non dimensionnelles sont accessibles à partir de la base de données de connaissances (410d) ;

la détermination, par le GTPOS par l'intermédiaire du ou des processeurs matériels, de l'efficacité de la première étape sur la base, au moins en partie, du coefficient de pression relatif, du coefficient de flux relatif et du ou des graphiques de caractéristiques non dimensionnelles (410e) ;

l'estimation, par le GTPOS par l'intermédiaire du ou des processeurs matériels, du débit massique de sortie, de la pression de sortie, de la température de sortie et de la vitesse de sortie pour la première étape sur la base, au moins en partie, du coefficient de flux relatif, du coefficient de pression relatif, de l'efficacité et du nombre de Mach (410f) ; et

l'identification, par le GTPOS par l'intermédiaire du ou des processeurs matériels, du débit massique de sortie en tant que débit massique d'entrée, de la pression de sortie en tant que pression d'entrée, de la température de sortie en tant que température d'entrée et d'une étape suivante du ou des étapes en tant que première étape, jusqu'à ce que tous les étapes dans le ou les étapes soient identifiés (410g) ;

l'estimation, par le GTPOS par l'intermédiaire du ou des processeurs matériels, de données de sortie de chambre de combustion associées à des gaz combustibles du système de turbine à gaz sur la base, au moins en partie, du débit massique de sortie, de la pression de sortie, de la température de sortie et de la vitesse de sortie, et des données d'entrée associées à la chambre de combustion, les données de sortie combustibles comprenant une pression de chambre de combustion, une température de chambre de combustion, un débit massique de chambre de combustion et une composition de gaz combustibles (412) ;

l'estimation, par le GTPOS par l'intermédiaire du ou des processeurs matériels, de données de sortie de turbine associées à des gaz d'échappement d'une turbine du système de turbine à gaz sur la base, au moins en partie, du débit massique de sortie, de la pression de sortie, de la température de sortie et de la vitesse de sortie, des données de sortie de chambre de combustion et des données d'entrée associées à la turbine (414);

la détermination, par le GTPOS par l'intermédiaire du ou des processeurs matériels, d'une valeur estimée associée à chaque paramètre de performance de turbine à gaz en régime permanent du ou des paramètres de performance de turbine à gaz en régime permanent sur la base, au moins en partie, du débit massique de sortie, de la pression de sortie, de la température de sortie, de la vitesse de sortie, des données de sortie de chambre de combustion et des données de sortie de turbine (416) ;

la détermination, par le GTPOS par l'intermédiaire du ou des processeurs matériels, d'une valeur estimée associée à chaque variable d'état transitoire de turbine à gaz de la ou des variables d'état transitoires de turbine à gaz sur la base de la valeur estimée associée à chaque paramètre de performance de turbine à gaz en régime permanent en utilisant un ou plusieurs modèles de composant transitoires de turbine à gaz, et le ou les modèles de composant transitoires de turbine à gaz sont accessibles à partir d'une base de données de modèles, dans lequel le ou les modèles de composant transitoires de turbine à gaz comprennent l'un parmi : un ou plusieurs modèles basés sur la physique et un ou plusieurs modèles basés sur les données (418) ;

la détermination, par le GTPOS par l'intermédiaire du ou des processeurs matériels, si la valeur estimée de chaque variable d'état transitoire de turbine à gaz de la ou des variables d'état transitoires de turbine à gaz est dans les limites de seuil prédéfinies définies pour la variable d'état transitoire de turbine à gaz respective (420);

lors de la détermination que la valeur estimée pour chaque variable d'état transitoire de turbine à gaz de la ou des variables d'état transitoires de turbine à gaz n'est pas dans les limites de seuil prédéfinies définies pour la variable d'état transitoire de turbine à gaz respective, la résolution, par le GTPOS par l'intermédiaire du ou des processeurs matériels, d'un problème d'optimisation de processus pour identifier des paramètres de processus optimaux qui maintiennent la valeur estimée de chaque variable d'état transitoire de turbine à gaz dans les limites de seuil prédéfinies définies pour la variable d'état transitoire de turbine à gaz respective (422) ; et

l'affichage, par le GTPOS par l'intermédiaire du ou des processeurs matériels, des paramètres de processus optimaux (424).

2. Procédé mis en œuvre par processeur selon la revendication 1, comprenant en outre :

le calcul, par le GTPOS par l'intermédiaire du ou des processeurs matériels, d'un indice de qualité de performance prédictive en comparant les valeurs estimées du ou des paramètres de processus de turbine à gaz en régime permanent avec les valeurs en temps réel du ou des paramètres de processus de turbine à gaz en régime permanent;

la détermination, par le GTPOS par l'intermédiaire du ou des processeurs matériels, si l'indice de qualité de performance prédictive calculé est inférieur à un seuil d'indice de qualité de performance prédictive prédéfini ;

lors de la détermination que l'indice de qualité de performance prédictive calculé est inférieur au seuil d'indice de qualité de performance prédictive prédéfini, l'initiation, par le GTPOS par l'intermédiaire du ou des processeurs matériels, d'une calibration de point de conception pour ajuster un ou plusieurs paramètres de réglage de turbine à gaz prédéterminés de sorte que l'indice de qualité de performance prédictive calculé reste supérieur au seuil d'indice de qualité de performance prédictive prédéfini, dans lequel le ou les paramètres de réglage de turbine à gaz prédéterminés ajustés sont stockés dans la base de données de connaissances.

3. Procédé mis en œuvre par processeur selon la revendication 1, comprenant en outre :

la réception, par le GTPOS par l'intermédiaire du ou des processeurs matériels, d'un ou plusieurs nouveaux ensembles de données d'entrée associées au compresseur ;

l'estimation, par le GTPOS par l'intermédiaire du ou des processeurs matériels, de la pression de sortie de compresseur pour chaque nouvel ensemble de données d'entrée associées au compresseur du ou des nouveaux ensembles de données d'entrée associées au compresseur ;

la création, par le GTPOS par l'intermédiaire du ou des processeurs matériels, d'une carte de performance de compresseur sur la base de la pression de sortie de compresseur estimée pour chaque nouvel ensemble de données d'entrée associées au compresseur du ou des nouveaux ensembles de données d'entrée associées au compresseur, dans lequel la carte de performance de compresseur comprend une ou plusieurs courbes, dans lequel chaque courbe est associé à chaque nouvel ensemble de données d'entrée associées au compresseur qui a la même vitesse de rotation non dimensionnelle, et dans lequel la vitesse de rotation non dimensionnelle est obtenue en divisant la nouvelle vitesse de rotation d'arbre par la racine carrée de la nouvelle température d'entrée présente dans le nouvel ensemble respectif de données d'entrée associées au compresseur ;

l'identification, par le GTPOS par l'intermédiaire du ou des processeurs matériels, d'un point d'inflexion pour chaque courbe du ou des courbes dans la carte de performance de compresseur ; et

l'affichage, par le GTPOS par l'intermédiaire du ou des processeurs matériels, d'un point de pompage pour chaque nouvelle donnée d'entrée associée au compresseur sur la base du point d'inflexion identifié pour la nouvelle donnée d'entrée associée au compresseur correspondante.

4. Procédé mis en œuvre par processeur selon la revendication 1, comprenant en outre :

lors de la détermination que le nombre de Mach n'est pas inférieur au nombre de Mach prédéfini,

l'identification, par le GTPOS par l'intermédiaire du ou des processeurs matériels, des données d'entrée associées au compresseur en tant que point de saturation pour la première étape ; et

l'affichage, par le GTPOS par l'intermédiaire du ou des processeurs matériels, du point de saturation de la première étape et d'une notification de saturation, la notification de saturation comprenant un message pour modifier au moins l'un des éléments suivants : le débit massique d'entrée et de l'angle des aubes directrices d'entrée (IGV) de sorte que la saturation du compresseur dans le premier étage soit évité.

5. Système d'optimisation de performance de turbine à gaz (GTPOS) (200), comprenant :

une mémoire (208) stockant des instructions ;
une ou plusieurs interfaces de communication (210) ; et
un ou plusieurs processeurs matériels (206) couplés à la mémoire (208) par l'intermédiaire de la ou des interfaces de communication (210), dans lequel le ou les processeurs matériels (206) sont configurés par les instructions pour :

la réception de données de capteur en temps réel et de données en temps non réel provenant d'une ou plusieurs sources de données ;
le prétraitement des données de capteur en temps réel et des données en temps non réel pour obtenir des données prétraitées ;
l'estimation d'un ou plusieurs paramètres de processus associés à un système de turbine à gaz sur la base des données prétraitées en utilisant un ou plusieurs capteurs logiciels ;
la génération de données d'entrée associées au système de turbine à gaz en combinant le ou les paramètres de processus et les données prétraitées, dans lequel les données d'entrée comprennent un ou plusieurs parmi : des données d'entrée associées au compresseur, des données d'entrée associées à la chambre de combustion, des données d'entrée associées à la turbine et des données de performance de turbine à gaz, dans lequel les données d'entrée associées au compresseur comprennent un débit massique d'entrée, une température d'entrée, une pression d'entrée, un angle d'aube directrice d'entrée (IGV) et une vitesse de rotation d'arbre, et dans lequel les données de performance de turbine à gaz comprennent une valeur en temps réel associée à chaque paramètre de performance de turbine à gaz en régime permanent d'un ou plusieurs paramètres de performance de turbine à gaz en régime permanent et une valeur en temps réel associée à chaque variable d'état transitoire de turbine à gaz d'une ou plusieurs variables d'état transitoires de turbine à gaz ;
la détermination d'un débit massique de sortie, d'une pression de sortie, d'une température de sortie et d'une vitesse de sortie pour chaque étape d'un ou plusieurs étapes du compresseur en utilisant les données d'entrée associées au compresseur et une aire de section transversale de compresseur en effectuant de manière itérative :

l'estimation d'un nombre de Mach pour une première étape des étapes sur la base, au moins en partie, de l'aire de section transversale de compresseur, de l'angle d'IGV, d'une constante de gaz réelle, d'un rapport de constante thermique spécifique et d'un ou plusieurs paramètres de réglage de turbine à gaz prédéterminés en utilisant une formule prédéfinie de calcul de nombre de Mach, dans lequel le ou les paramètres de réglage de turbine à gaz prédéterminés sont accessibles à partir d'une base de données de connaissances et la constante de gaz réelle est accessible à partir d'une base de données de laboratoire, et dans lequel le rapport de constante thermique spécifique est déterminé sur la base de la température d'entrée ;
la détermination si le nombre de Mach estimé est inférieur à un nombre de Mach prédéfini ;
lors de la détermination que le nombre de Mach est inférieur au nombre de Mach prédéfini, l'estimation d'un coefficient de flux relatif pour la première étape sur la base, au moins en partie, du nombre de Mach estimé, du débit massique d'entrée, de la température d'entrée, de la pression d'entrée, de la vitesse de rotation d'arbre, du rapport de constante thermique spécifique et du ou des paramètres de réglage de turbine à gaz prédéterminés ;
la détermination d'un coefficient de pression relatif pour le première étape sur la base du coefficient de flux relatif en utilisant un ou plusieurs graphiques de caractéristiques non dimensionnelles et le ou les paramètres de réglage de turbine à gaz prédéterminés, dans lequel le ou les graphiques de caractéristiques non dimensionnelles sont accessibles à partir de la base de données de connaissances ;
la détermination de l'efficacité de la première étape sur la base, au moins en partie, du coefficient de pression relatif, du coefficient de flux relatif et du ou des graphiques de caractéristiques non dimensionnelles ;
l'estimation du débit massique de sortie, de la pression de sortie, de la température de sortie et de la vitesse de sortie pour la première étape sur la base, au moins en partie, du coefficient de flux relatif, du coefficient de pression relatif, de l'efficacité et du nombre de Mach ; et
l'identification du débit massique de sortie en tant que débit massique d'entrée, de la pression de sortie en tant que pression d'entrée, de la température de sortie en tant que température d'entrée et d'une étape suivante du ou des étapes en tant que première étape, jusqu'à ce que tous les étapes dans le ou les étapes soient identifiés ;

l'estimation de données de sortie de chambre de combustion associées à des gaz combustibles du système de turbine à gaz sur la base, au moins en partie, du débit massique de sortie, de la pression de sortie, de la température de sortie et de la vitesse de sortie, et des données d'entrée associées à la chambre de combustion, les données de sortie combustibles comprenant une pression de chambre de combustion, une température de chambre de combustion, un débit massique de chambre de combustion et une composition de gaz combustibles ;

l'estimation de données de sortie de turbine associées à des gaz d'échappement d'une turbine du système de turbine à gaz sur la base, au moins en partie, du débit massique de sortie, de la pression de sortie, de la température de sortie et de la vitesse de sortie, des données de sortie de chambre de combustion et des données d'entrée associées à la turbine ;

la détermination d'une valeur estimée associée à chaque paramètre de performance de turbine à gaz en régime permanent du ou des paramètres de performance de turbine à gaz en régime permanent sur la base, au moins en partie, du débit massique de sortie, de la pression de sortie, de la température de sortie, de la vitesse de sortie, des données de sortie de chambre de combustion et des données de sortie de turbine ;

la détermination d'une valeur estimée associée à chaque variable d'état transitoire de turbine à gaz de la ou des variables d'état transitoires de turbine à gaz sur la base de la valeur estimée associée à chaque paramètre de performance de turbine à gaz en régime permanent en utilisant un ou plusieurs modèles de composant transitoires de turbine à gaz, et le ou les modèles de composant transitoires de turbine à gaz sont accessibles à partir d'une base de données de modèles, dans lequel le ou les modèles de composant transitoires de turbine à gaz comprennent l'un parmi : un ou plusieurs modèles basés sur la physique et un ou plusieurs modèles basés sur les données ;

la détermination si la valeur estimée de chaque variable d'état transitoire de turbine à gaz de la ou des variables d'état transitoires de turbine à gaz est dans les limites de seuil prédéfinies définies pour la variable d'état transitoire de turbine à gaz respective ;

lors de la détermination que la valeur estimée pour chaque variable d'état transitoire de turbine à gaz de la ou des variables d'état transitoires de turbine à gaz n'est pas dans les limites de seuil prédéfinies définies pour la variable d'état transitoire de turbine à gaz respective, la résolution d'un problème d'optimisation de processus pour identifier des paramètres de processus optimaux qui maintiennent la valeur estimée de chaque variable d'état transitoire de turbine à gaz dans les limites de seuil prédéfinies définies pour la variable d'état transitoire de turbine à gaz respective ; et

l'affichage des paramètres de processus optimaux.

6. Système selon la revendication 5, dans lequel le ou les processeurs matériels sont en outre amenés à :

le calcul d'un indice de qualité de performance prédictive en comparant les valeurs estimées du ou des paramètres de processus de turbine à gaz en régime permanent avec les valeurs en temps réel du ou des paramètres de processus de turbine à gaz en régime permanent ;

la détermination si l'indice de qualité de performance prédictive calculé est inférieur à un seuil d'indice de qualité de performance prédictive prédéfini ;

lors de la détermination que l'indice de qualité de performance prédictive calculé est inférieur au seuil d'indice de qualité de performance prédictive prédéfini, l'initiation d'une calibration de point de conception pour ajuster un ou plusieurs paramètres de réglage de turbine à gaz prédéterminés de sorte que l'indice de qualité de performance prédictive calculé reste supérieur au seuil d'indice de qualité de performance prédictive prédéfini, dans lequel le ou les paramètres de réglage de turbine à gaz prédéterminés ajustés sont stockés dans la base de données de connaissances.

7. Système selon la revendication 5, dans lequel le ou les processeurs matériels sont en outre amenés à :

la réception d'un ou plusieurs nouveaux ensembles de données d'entrée associées au compresseur ;

l'estimation de la pression de sortie de compresseur pour chaque nouvel ensemble de données d'entrée associées au compresseur du ou des nouveaux ensembles de données d'entrée associées au compresseur ;

la création d'une carte de performance de compresseur sur la base de la pression de sortie de compresseur estimée pour chaque nouvel ensemble de données d'entrée associées au compresseur du ou des nouveaux ensembles de données d'entrée associées au compresseur, dans lequel la carte de performance de compresseur comprend une ou plusieurs courbes, dans lequel chaque courbe est associé à chaque nouvel ensemble de données d'entrée associées au compresseur qui a la même vitesse de rotation non dimensionnelle, et dans lequel la vitesse de rotation non dimensionnelle est obtenue en divisant la nouvelle vitesse de rotation d'arbre par la racine carrée de la nouvelle température d'entrée présente dans le nouvel ensemble respectif de données d'entrée associées au compresseur ;

l'identification d'un point d'inflexion pour chaque courbe du ou des courbes dans la carte de performance de compresseur ; et

l'affichage d'un point de pompage pour chaque nouvelle donnée d'entrée associée au compresseur sur la base du point d'inflexion identifié pour la nouvelle donnée d'entrée associée au compresseur correspondante.

8. Système selon la revendication 5, dans lequel le ou les processeurs matériels sont en outre amenés à :

lors de la détermination que le nombre de Mach n'est pas inférieur au nombre de Mach prédéfini, l'identification des données d'entrée associées au compresseur en tant que point de saturation pour la première étape ; et

l'affichage du point de saturation de la première étape et d'une notification de saturation, la notification de saturation comprenant un message pour modifier au moins l'un des éléments suivants : le débit massique d'entrée et de l'angle des aubes directrices d'entrée (IGV) de sorte que la saturation du compresseur dans le premier étage soit évité.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception, par un système d'optimisation de performance de turbine à gaz (GTPOS), de données de capteur en temps réel et de données en temps non réel provenant d'une ou plusieurs sources de données ;

le prétraitement, par le GTPOS, des données de capteur en temps réel et des données en temps non réel pour obtenir des données prétraitées ;

l'estimation, par le GTPOS, d'un ou plusieurs paramètres de processus associés à un système de turbine à gaz sur la base des données prétraitées en utilisant un ou plusieurs capteurs logiciels ;

la génération, par le GTPOS, de données d'entrée associées au système de turbine à gaz en combinant le ou les paramètres de processus et les données prétraitées, dans lequel les données d'entrée comprennent un ou plusieurs parmi : des données d'entrée associées au compresseur, des données d'entrée associées à la chambre de combustion, des données d'entrée associées à la turbine et des données de performance de turbine à gaz, dans lequel les données d'entrée associées au compresseur comprennent un débit massique d'entrée, une température d'entrée, une pression d'entrée, un angle d'aube directrice d'entrée (IGV) et une vitesse de rotation d'arbre, et dans lequel les données de performance de turbine à gaz comprennent une valeur en temps réel associée à chaque paramètre de performance de turbine à gaz en régime permanent d'un ou plusieurs paramètres de performance de turbine à gaz en régime permanent et une valeur en temps réel associée à chaque variable d'état transitoire de turbine à gaz d'une ou plusieurs variables d'état transitoires de turbine à gaz ;

la détermination, par le GTPOS, d'un débit massique de sortie, d'une pression de sortie, d'une température de sortie et d'une vitesse de sortie pour chaque étape d'un ou plusieurs étapes du compresseur en utilisant les données d'entrée associées au compresseur et une aire de section transversale de compresseur en effectuant de manière itérative :

l'estimation, par le GTPOS, d'un nombre de Mach pour une première étape des étapes sur la base, au moins en partie, de l'aire de section transversale de compresseur, de l'angle d'IGV, d'une constante de gaz réelle, d'un rapport de constante thermique spécifique et d'un ou plusieurs paramètres de réglage de turbine à gaz prédéterminés en utilisant une formule prédéfinie de calcul de nombre de Mach, dans lequel le ou les paramètres de réglage de turbine à gaz prédéterminés sont accessibles à partir d'une base de données de connaissances et la constante de gaz réelle est accessible à partir d'une base de données de laboratoire, et dans lequel le rapport de constante thermique spécifique est déterminé sur la base de la température d'entrée ;

la détermination, par le GTPOS, si le nombre de Mach estimé est inférieur à un nombre de Mach prédéfini ;

lors de la détermination que le nombre de Mach est inférieur au nombre de Mach prédéfini, l'estimation, par le GTPOS, d'un coefficient de flux relatif pour la première étape sur la base, au moins en partie, du nombre de Mach estimé, du débit massique d'entrée, de la température d'entrée, de la pression d'entrée, de la vitesse de rotation d'arbre, du rapport de constante thermique spécifique et du ou des paramètres de réglage de turbine à gaz prédéterminés ;

la détermination, par le GTPOS, d'un coefficient de pression relatif pour le première étape sur la base du coefficient de flux relatif en utilisant un ou plusieurs graphiques de caractéristiques non dimensionnelles et le ou les paramètres de réglage de turbine à gaz prédéterminés, dans lequel le ou les graphiques de caractéristiques non dimensionnelles sont accessibles à partir de la base de données de connaissances ;

la détermination, par le GTPOS, de l'efficacité de la première étape sur la base, au moins en partie, du coefficient de pression relatif, du coefficient de flux relatif et du ou des graphiques de caractéristiques non dimensionnelles ;

l'estimation, par le GTPOS, du débit massique de sortie, de la pression de sortie, de la température de sortie et de la vitesse de sortie pour la première étape sur la base, au moins en partie, du coefficient de flux relatif, du coefficient de pression relatif, de l'efficacité et du nombre de Mach ; et

l'identification, par le GTPOS par l'intermédiaire du ou des processeurs matériels, du débit massique de sortie en tant que débit massique d'entrée, de la pression de sortie en tant que pression d'entrée, de la température de sortie en tant que température d'entrée et d'une étape suivante du ou des étapes en tant que première étape, jusqu'à ce que tous les étapes dans le ou les étapes soient identifiés ;

l'estimation, par le GTPOS, de données de sortie de chambre de combustion associées à des gaz combustibles du système de turbine à gaz sur la base, au moins en partie, du débit massique de sortie, de la pression de sortie, de la température de sortie et de la vitesse de sortie, et des données d'entrée associées à la chambre de combustion, les données de sortie combustibles comprenant une pression de chambre de combustion, une température de chambre de combustion, un débit massique de chambre de combustion et une composition de gaz combustibles ;

l'estimation, par le GTPOS, de données de sortie de turbine associées à des gaz d'échappement d'une turbine du système de turbine à gaz sur la base, au moins en partie, du débit massique de sortie, de la pression de sortie, de la température de sortie et de la vitesse de sortie, des données de sortie de chambre de combustion et des données d'entrée associées à la turbine ;

la détermination, par le GTPOS, d'une valeur estimée associée à chaque paramètre de performance de turbine à gaz en régime permanent du ou des paramètres de performance de turbine à gaz en régime permanent sur la base, au moins en partie, du débit massique de sortie, de la pression de sortie, de la température de sortie, de la vitesse de sortie, des données de sortie de chambre de combustion et des données de sortie de turbine ;

la détermination, par le GTPOS, d'une valeur estimée associée à chaque variable d'état transitoire de turbine à gaz de la ou des variables d'état transitoires de turbine à gaz sur la base de la valeur estimée associée à chaque paramètre de performance de turbine à gaz en régime permanent en utilisant un ou plusieurs modèles de composant transitoires de turbine à gaz, et le ou les modèles de composant transitoires de turbine à gaz sont accessibles à partir d'une base de données de modèles, dans lequel le ou les modèles de composant transitoires de turbine à gaz comprennent l'un parmi : un ou plusieurs modèles basés sur la physique et un ou plusieurs modèles basés sur les données ;

la détermination, par le GTPOS, si la valeur estimée de chaque variable d'état transitoire de turbine à gaz de la ou des variables d'état transitoires de turbine à gaz est dans les limites de seuil prédéfinies définies pour la variable d'état transitoire de turbine à gaz respective ;

lors de la détermination que la valeur estimée pour chaque variable d'état transitoire de turbine à gaz de la ou des variables d'état transitoires de turbine à gaz n'est pas dans les limites de seuil prédéfinies définies pour la variable d'état transitoire de turbine à gaz respective, la résolution, par le GTPOS par l'intermédiaire du ou des processeurs matériels, d'un problème d'optimisation de processus pour identifier des paramètres de processus optimaux qui maintiennent la valeur estimée de chaque variable d'état transitoire de turbine à gaz dans les limites de seuil prédéfinies définies pour la variable d'état transitoire de turbine à gaz respective ; et

l'affichage, par le GTPOS, des paramètres de processus optimaux.

**10.** Un ou plusieurs supports de stockage d'informations lisibles par machine non transitoires selon la revendication 9, dans lequel la ou les instructions qui, lorsqu'elles sont exécutées par le ou les processeurs matériels, amènent en outre :

le calcul, par le GTPOS, d'un indice de qualité de performance prédictive en comparant les valeurs estimées du ou des paramètres de processus de turbine à gaz en régime permanent avec les valeurs en temps réel du ou des paramètres de processus de turbine à gaz en régime permanent ;

la détermination, par le GTPOS, si l'indice de qualité de performance prédictive calculé est inférieur à un seuil d'indice de qualité de performance prédictive prédéfini ;

lors de la détermination que l'indice de qualité de performance prédictive calculé est inférieur au seuil d'indice de qualité de performance prédictive prédéfini, l'initiation, par le GTPOS, d'une calibration de point de conception pour ajuster un ou plusieurs paramètres de réglage de turbine à gaz prédéterminés de sorte que l'indice de qualité de performance prédictive calculé reste supérieur au seuil d'indice de qualité de performance prédictive prédéfini, dans lequel le ou les paramètres de réglage de turbine à gaz prédéterminés ajustés sont stockés dans la base de données de connaissances.

11. Un ou plusieurs supports de stockage d'informations lisibles par machine non transitoires selon la revendication 9, dans lequel la ou les instructions qui, lorsqu'elles sont exécutées par le ou les processeurs matériels, amènent en outre :

la réception, par le GTPOS, d'un ou plusieurs nouveaux ensembles de données d'entrée associées au compresseur ;

l'estimation, par le GTPOS, de la pression de sortie de compresseur pour chaque nouvel ensemble de données d'entrée associées au compresseur du ou des nouveaux ensembles de données d'entrée associées au compresseur ;

la création, par le GTPOS, d'une carte de performance de compresseur sur la base de la pression de sortie de compresseur estimée pour chaque nouvel ensemble de données d'entrée associées au compresseur du ou des nouveaux ensembles de données d'entrée associées au compresseur, dans lequel la carte de performance de compresseur comprend une ou plusieurs courbes, dans lequel chaque courbe est associé à chaque nouvel ensemble de données d'entrée associées au compresseur qui a la même vitesse de rotation non dimensionnelle, et dans lequel la vitesse de rotation non dimensionnelle est obtenue en divisant la nouvelle vitesse de rotation d'arbre par la racine carrée de la nouvelle température d'entrée présente dans le nouvel ensemble respectif de données d'entrée associées au compresseur ;

l'identification, par le GTPOS, d'un point d'inflexion pour chaque courbe du ou des courbes dans la carte de performance de compresseur ; et

l'affichage, par le GTPOS, d'un point de pompage pour chaque nouvelle donnée d'entrée associée au compresseur sur la base du point d'inflexion identifié pour la nouvelle donnée d'entrée associée au compresseur correspondante.

12. Un ou plusieurs supports de stockage d'informations lisibles par machine non transitoires selon la revendication 9, dans lequel la ou les instructions qui, lorsqu'elles sont exécutées par le ou les processeurs matériels, amènent en outre :

lors de la détermination que le nombre de Mach n'est pas inférieur au nombre de Mach prédéfini, l'identification, par le GTPOS, des données d'entrée associées au compresseur en tant que point de saturation pour la première étape ; et

l'affichage, par le GTPOS, du point de saturation de la première étape et d'une notification de saturation, la notification de saturation comprenant un message pour modifier au moins l'un des éléments suivants : le débit massique d'entrée et de l'angle des aubes directrices d'entrée (IGV) de sorte que la saturation du compresseur dans le premier étage soit évité.

FIG. 1

TO/FROM
REMOTE SYSTEM 218

FIG. 2

200

**FIG. 3A**

300

**FIG. 3B**

350

receiving, by a gas turbine performance optimization system (GTPOS) via one or more hardware processors, real-time sensor data and non-real time data from one or more data sources    402

pre-processing, by the GTPOS via the one or more hardware processors, the real-time sensor data, and the non-real time data to obtain preprocessed data    404

estimating, by the GTPOS via the one or more hardware processors, one or more process parameters associated with a gas turbine system based on the preprocessed data using one or more soft sensors    406

generating, by the GTPOS via the one or more hardware processors, input data associated with the gas turbine system by combining the one or more process parameters and the preprocessed data, wherein the input data comprises one or more of: compressor associated input data, combustor associated input data, turbine associated input data, and gas turbine performance data, wherein the compressor associated input data comprises an inlet mass flow rate, an inlet temperature, an inlet pressure, an inlet guide vane (IGV) angle, and a shaft rotation speed, wherein the gas turbine performance data comprises a real-time value associated with each steady state gas turbine performance parameter of one or more steady state gas turbine performance parameters and a real-time value associated with each transient gas turbine state variable of one or more transient gas turbine state variables    408

determining, by the GTPOS via the one or more hardware processors, an outlet mass flow rate, an outlet pressure, an outlet temperature, and an outlet velocity for each stage of one or more stages of the compressor using the compressor associated input data and a compressor cross section area by iteratively performing:    410

A

400

**FIG. 4A**

A

estimating, by the GTPOS via the one or more hardware processors, a Mach number of a first stage of the one or more stages based, at least in part, on the compressor cross section area, the IGV angle, a real gas constant, a specific heat constant ratio and one or more pre-determined gas turbine tuning parameters using a predefined Mach number calculation formula, wherein the one or more pre-determined gas turbine tuning parameters are accessed from a knowledge database and the real gas constant is accessed from a laboratory database, wherein the specific heat constant ratio is determined based on the inlet temperature 410a

determining, by the GTPOS via the one or more hardware processors, whether the estimated Mach number is below a predefined Mach number 410b

upon determining that the Mach number is below the predefined Mach number, estimating, by the GTPOS via the one or more hardware processors, a relative flow coefficient for the first stage based, at least in part on, the estimated Mach number, the inlet mass flow rate, the inlet temperature, the inlet pressure, the shaft rotation speed, the specific heat constant ratio, and the one or more pre-determined gas turbine tuning parameters 410c

B

400

FIG. 4B

B

determining, by the GTPOS via the one or more hardware processors, a relative pressure coefficient for the first stage based on the relative flow coefficient using one or more non-dimensional characteristics plots and the one or more pre-determined gas turbine tuning parameters, wherein the one or more non-dimensional characteristics plots are accessed from the knowledge database 410d

determining, by the GTPOS via the one or more hardware processors, an efficiency of the first stage based, at least in part, on the relative pressure coefficient, the relative flow coefficient, and the one or more non-dimensional characteristics plots 410e

estimating, by the GTPOS via the one or more hardware processors, the outlet mass flow rate, the outlet pressure, the outlet temperature, and the outlet velocity for the first stage based, at least in part, on the relative flow coefficient, the relative pressure coefficient, the efficiency, and the Mach number 410f

identifying, by the GTPOS via the one or more hardware processors, the outlet mass flow rate as the inlet mass flow rate, the outlet pressure as the inlet pressure, the outlet temperature as the inlet temperature, and a next stage of the one or more stages as the first stage, until all the stages in the one or more stages are identified 410g

C

400

**FIG. 4C**

C

estimating, by the GTPOS via the one or more hardware processors, combustor output data associated with combusted gases of the gas turbine system based, at least in part, on the outlet mass flow rate, the outlet pressure, the outlet temperature and the outlet velocity, and the combustor associated input data, the combusted output data comprising a combustor pressure, a combustor temperature, a combustor mass flow rate and composition of combusted gases     412

estimating, by the GTPOS via the one or more hardware processors, turbine output data associated with exhaust gases of a turbine of the gas turbine system based, at least in part, on the outlet mass flow rate, the outlet pressure, the outlet temperature and the outlet velocity, the combustor output data, and the turbine associated input data     414

determining, by the GTPOS via the one or more hardware processors, an estimated value associated with each steady state gas turbine performance parameter of the one or more steady state gas turbine performance parameters based, at least in part, on the outlet mass flow rate, the outlet pressure, the outlet temperature, the outlet velocity, the combustor output data, and the turbine output data     416

determining, by the GTPOS via the one or more hardware processors, an estimated value associated with each transient gas turbine state variable of the one or more transient gas turbine state variables based on the estimated value associated with each steady state gas turbine performance parameter using one or more transient gas turbine component models, the one or more transient gas turbine component models are accessed from a model database     418

D

400

**FIG. 4D**

D

determining, by the GTPOS via the one or more hardware processors, whether estimated value of each transient gas turbine state variable of the one or more transient gas turbine state variables is within predefined threshold limits defined for the respective transient gas turbine state variable                                              420

upon determining that estimated value for each transient gas turbine state variable of the one or more transient gas turbine state variables is not within the predefined threshold limits defined for the respective transient gas turbine state variable, solving, by the GTPOS via the one or more hardware processors, a process optimization problem to identify optimal process settings that maintain estimated value of each transient gas turbine state variable within the predefined threshold limits defined for the respective transient gas turbine state variable                                              422

displaying, by the GTPOS via the one or more hardware processors, the optimal process settings                                              424

**FIG. 4E**                                              400

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221005901

- US 2020248622 A